# EUROPÄISCHE PATENTSCHRIFT

(11) **EP 3 552 933 B1**
(45) Veröffentlichungstag und Bekanntmachung des Hinweises auf die Patenterteilung: **05.08.2020**
(21) Anmeldenummer: 19165218.9
(22) Anmeldetag: 26.03.2019
(51) Int. Cl.: B62H 1/00, B62B 1/12, B62D 63/06, B65D 90/14, B62K 7/04

(54) **WECHSELCONTAINER MIT STÜTZBEINEN ODER TRAILER MIT STÜTZBEINEN**
SWAPPABLE CONTAINER WITH SUPPORTING LEGS OR TRAILER PROVIDED WITH SUPPORTING LEGS
CONTENANT INTERCHANGEABLE POURVU DE PIEDS D'APPUI OU REMORQUE POURVUE DE PIEDS D'APPUI

(30) Priorität: 11.04.2018 DE 102018108607
(43) Veröffentlichungstag der Anmeldung: 16.10.2019
(73) Patentinhaber: Weber, Herbert, 82354 Breitbrunn (DE)
(72) Erfinder: Weber, Herbert, 82354 Breitbrunn (DE)
(74) Vertreter: Weickmann & Weickmann PartmbB

(56) Entgegenhaltungen:
- CN-A- 103 661 713
- JP-A- 2003 267 389
- JP-A- 2009 234 577
- JP-U- S57 177 944
- ANONYMOUS: "Manual Urban Arrow Family", URBAN ARROW MANUAL, VERSION UAF-FM2017EN-0001, 1. März 2017 (2017-03-01), XP055560313,

## Beschreibung

### I. Anwendungsgebiet

Die Erfindung betrifft einen abstellbaren Wechselcontainer oder Trailer, der zu diesem Zweck ausschwenkbare Stützbeine aufweist, wobei der Wechselcontainer oder Trailer vorzugsweise durch ein Lastenfahrrad aufnehmbar und transportierbar ist.

### II. Technischer Hintergrund

Aus dem LKW-Bereich sind sogenannte Wechselcontainer bereits bekannt:
Dabei verfügen die bekannten Übersee-Container - die auf der Ladefläche eines LKW aufsitzend mittels der bekannten Twistlocks verriegelt werden - zur Verwendung als Wechselcontainer zusätzlich über schwenkbare Stützbeine, die im deaktivierten Zustand in eine horizontale Lage am oder unter dem Boden des Wechselcontainers herangeklappt sind, und - meist manuell - in eine vertikale, nach unten weisende aktivierte Lage, die Stützposition, verschwenkt werden können.

Sind die in der Regel vier an einem solchen Wechselcontainer befestigten Stützbeine nach unten ausgeklappt in die Stützposition, kann der Wechselcontainer durch Absenken der Stützbeine auf den Untergrund abgestellt werden und nach Lösen der Verriegelung am LKW, also in der Regel nach Lösen der Twistlocks, kann der LKW unter dem aufgeständerten Wechselcontainer herausfahren und andere Transportaufgaben wahrnehmen.

Das zu diesem Zweck notwendige Anheben des Wechselcontainers vor dem nach unten klappen der Stützbeine in die vertikale Stützstellung und das anschließende Absenken des Wechselcontainers mit den ausgeklappten Stützfüßen bis zum Aufsetzen auf dem Untergrund wird in aller Regel mittels der Luftfederung des LKW realisiert, und ebenso das beim Aufsatteln eines solchen abgestellten Wechselcontainers notwendige Abheben des Wechselbehälters und dessen Stützbeine vom Untergrund.

In gleicher Weise ist ein Abstützen eines sogenannten Trailers, also eines im angekoppelten Zustand mittels Königszapfen und Sattelkupplung an einem Zugfahrzeug befestigten Sattelaufliegers, im vorderen Bereich notwendig, wenn dieser abgestellt werden soll, und das bisherige Zugfahrzeug vom Trailer abgekoppelt werden soll.

Im innerstädtischen Bereich werden Transportaufgaben zunehmend von Lastenfahrrädern übernommen, oder auch von relativ kleinen, häufig elektrisch angetriebenen, vierrädrigen Transportern, wobei ebenfalls ein Bedarf an damit transportierbaren, kleineren abstellbaren und aufsattelbaren Wechselcontainern oder Trailern besteht.

Auch hier soll das Lastenfahrrad oder der Kleintransporter über eine Ladefläche verfügen, die bei einem Lastenfahrrad vor oder hinter dem Fahrersitz angeordnet sein kann, und mit der das Lastenfahrrad oder der Kleintransporter unter einen aufgeständert abgestellten Wechselcontainer fahren können und diesen aufsatteln können soll.

Allerdings verfügen dabei weder ein Lastenfahrrad noch ein solcher Kleintransporter über eine Luftfederung, mit der die Höhe dieser Ladefläche über dem Untergrund gesteuert verändert werden kann zum Aufsatteln oder Absatteln eines Wechselcontainers. Darüber hinaus ist die Höhe der Ladefläche durch äußere Faktoren wie etwa das Gewicht des Fahrers, oder die Tatsache, ob der Fahrer momentan auf dem Lastenfahrrad sitzt oder nicht, veränderbar.

In diesem Fall muss
- entweder die Ladefläche des Lastenfahrrades oder Kleintransporters gegenüber dem Untergrund mit anderen Mitteln in ihrer Höhe gesteuert veränderbar sein
- oder die Stützbeine als längenveränderbare Hubbeine ausgebildet sein, die auch in der Lage sind, einen gefüllten, schweren Wechselcontainer von der Ladefläche des Fahrzeuges aus hochzustemmen.

Das Gleiche gilt für die Stützbeine am vorderen Ende eines Trailers, wobei dann die Oberseite der Sattelkupplung am Zugfahrzeug der zuvor genannten Ladefläche entspricht.

Dementsprechend benötigt
- ein Trailer zum Abstellen mindestens zwei Stützbeine, je einen beidseits seiner Längsmitte im vorderen Bereich, da der hintere Bereich durch die Räder der Hinterachsen abgestützt bleibt, während
- ein Wechselcontainer mindestens drei Stützbeine benötigt, und in der Regel vier Stützbeine besitzt, die in der Regel jeweils in den vier Eckbereichen der in der Aufsicht betrachtet in aller Regel rechteckigen Wechselcontainer angeordnet sind.

Beispielsweise zeigt das Dokument CN 103 661 713 A ein Trailer mit den Merkmalen des Oberbegriffs des Anspruchs 1.

### III. Darstellung der Erfindung

### a) Technische Aufgabe

Es ist daher die Aufgabe gemäß der vorliegenden Erfindung, eine Lösung für das beschriebene Problem zu bieten.

### b) Lösung der Aufgabe

Diese Aufgabe wird dadurch gelöst, dass die von den LKW-Wechselcontainern her bekannten Stützbeine - die ebenfalls eine am Wechselcontainer befestigte Beinbasis, eine demgegenüber um eine Schwenkachse verschwenkbare Beinstrebe sowie eine am freien Ende der Beinstrebe vorhandene Aufstandsfläche, insbesondere eine Fußplatte, aufweisen - hier zusätzlich in ihrer Länge, also ihrem Abstand von der Schwenkachse zur Aufstandsfläche, veränderbar sind, wobei die Veränderung dieses Abstandes mittels eines Ausfahrantriebes geschieht, der somit am Wechselcontainer bzw. Trailer, insbesondere in jedem Stützbein, vorhanden ist.

Da es bei einem Wechselcontainer oder Trailer, der von einem Lastenfahrrad - selbst wenn dieses über einen unterstützenden Elektroantrieb verfügen sollte - transportiert werden soll, kommt es mehr als bei den Wechselcontainern im LKW-Bereich auf ein geringes Gewicht und damit auch eine einfache Konstruktion mit wenigen Einzelteilen bei den Stützbeinen an, zumal diese bei einem auf die Größenordnung eines Lastenfahrrades verkleinerten Wechselcontainer gegenüber einem LKW-Wechselcontainer einen prozentual wesentlich höheren Anteil am Gesamtgewicht des Wechselcontainers haben.

Da ein solches Stützbein nicht nur aus der horizontalen, deaktivierten Lage herabgeklappt werden muss in die aufrechte, vorzugsweise vertikale, aktivierte Lage, sondern zusätzlich auch noch in seiner Länge, also dem oben beschriebene Abstand, verlängert werden muss, wird erfindungsgemäß vorgeschlagen, ein und denselben Antrieb, den Ausfahrantrieb, gleichzeitig für beide Funktionen zu nutzen.

Die Veränderung des Abstandes zwischen der horizontal liegenden Schwenkachse zum Herabklappen und Hochklappen des Stützbeines einerseits und der Aufstandsfläche andererseits wird im einfachsten Fall erreicht, indem in dieser Ausfahrrichtung eine Beinstrebe verläuft, die in ihrer Länge veränderbar ist, beispielsweise eine manuell betätigbare Gewindespindel oder ein auch motorisch betreibbarer Arbeitszylinder, insbesondere ein sogenannter Elektrozylinder.

Es soll jedoch nicht unerwähnt bleiben, dass diese Abstandsveränderung auch durch eine andere Gestaltung der Beinstrebe möglich ist, beispielsweise indem diese aus einem Gelenkviereck besteht, welches durch vier jeweils paarweise zueinander parallele Parallelogrammstreben miteinander verbunden sind, nach Art eines sogenannten Scheren-Wagenhebers, wobei dann jedoch in aller Regel kein zusätzliches Verschwenken des gesamten Beines gegenüber der Beinbasis mehr notwendig ist, sondern lediglich das Ausfahren dieses Scherengestänges.

Erfindungsgemäß wird deshalb von einer in Ausfahrrichtung mittels eines Arbeitszylinders wie einem Elektrozylinder, ausfahrbaren Beinstrebe, ausgegangen, die gegenüber der am Wechselcontainer befestigten Weinbasis um eine etwa horizontalen Schwenkachse hoch schwenkbar ist und umgekehrt.

Die erfindungsgemäße Lösung umfasst eine solche Wirkverbindung, dass beim Verringern der Länge der Beinstrebe die Beinstrebe automatisch um die horizontale Schwenkachse relativ zur Beinbasis nach oben schwenkt und umgekehrt.

Dabei umfasst die Wirkverbindung eine Koppelstrebe, die mit ihrem einen Endbereich - vorzugsweise gelenkig um eine Querachse zur Ausfahrrichtung der Beinstrebe - mit dem freien Endbereich der Beinstrebe, insbesondere einer Fußplatte, verbunden ist.

Im Falle des Vorhandenseins eines Arbeitszylinders - etwa Elektrozylinders, Pneumatikzylinders oder Hydraulikzylinders - als Beinstrebe ist die Koppelstrebe mit dem den freien Endbereich der Beinstrebe darstellenden Teil des Arbeitszylinders, also Zylinder oder Kolben, verbunden.

### (Lösung Verzahnung Koppelstrebe)

Bei einer ersten Lösung ist die Koppelstrebe in ihrem anderen Endbereich als Zahnstange ausgebildet ist, die in Ausfahrrichtung verläuft und ein damit kämmendes Ritzel ist konzentrisch zur horizontalen Schwenkachse angeordnet und drehfest mit der Beinbasis verbunden.

Beim beispielsweise Einfahren der Beinstrebe bewegt sich die Zahnstange tangential und in Eingriff mit dem Ritzel entlang, welches sich deshalb drehen muss und wegen der drehfesten Verbindung zur Beinbasis die gesamte Beinbasis gegenüber der Beinstrebe verschwenkt.

Damit Zahnstange und Ritzel im Eingriff zueinander bleiben, ist die Führungstrebe vorzugsweise
- entweder drehfest mit dem freien Endbereich der Beinstrebe verbunden
- oder gelenkig mit diesem Endbereich verbunden und die Zahnstange mittels einer Führung in Ausfahrdichtung an der Beinstrebe geführt.

### (Lösung Führungszapfen exzentrisch zu Schwenkpunkt an Beinbasis)

Bei einer zweiten Lösung ist die Koppelstrebe in ihrem anderen Endbereich im Abstand zur Schwenkachse gelenkig mit der Beinbasis verbunden und der Abstand dazwischen so bemessen, dass die Längenveränderung der Beinstrebe zwischen der maximalen und der minimalen Länge eine Verschwenkung der Beinstrebe gegenüber der Beinbasis um 90° bewirkt.

### (Lösung Führungszapfen in Nut)

Bei einer dritten Erfindungsgemäßen Lösung umfasst die Wirkverbindung zum einen Führungszapfen, der mit der Aufstandsfläche des Stützbeines wirkverbunden ist und insbesondere in Ausfahrrichtung synchron mit diesem zusammen bewegt wird, und auch zusammen mit diesem um einen synchronen Winkelbetrag um die horizontale Schwenkachse herum verschwenkbar ist.

Im einfachsten Fall ist der Führungszapfen an dem anderen Endbereich der Führungsstrebe ausgebildet, die im gegenüberliegenden Endbereich mit dem freien Ende der Beinstrebe, insbesondere der Fußplatte, verbunden ist.

Wenn der Ausfahrantrieb einen Arbeitszylinder umfasst, ist diese Führungsstrebe an dem gegenüber der Beinbasis ausfahrbaren Teil des Arbeitszylinders, meist der Kolbenstange, befestigt.

Dieser Führungszapfen ist in einer Führungsnut geführt und entlang dieser verschiebbar, die in der Beinbasis ausgebildet ist und die wenigstens teilweise eine bogenförmige Gestalt besitzt, also einen Bogen oder Polygonzug umfasst, der um die horizontale Schwenkachse der Beinbasis gegenüber dem Wechselcontainer herum verläuft.

In der Regel, jedoch nicht zwingend, ist dieser Bogen ein Kreisbogen, und/oder erstreckt sich über 90°, sodass er sich insbesondere bei einer Positionierung des Führungszapfens in jeweils einem der beiden Enden des Bogens sich einerseits horizontal auf der gleichen Höhe wie die Schwenkachse befindet und andererseits, also am anderen, oberen Ende des Bogens der Führungsnut, in vertikaler Richtung genau oberhalb der horizontalen Schwenkachse.

Die Ebene, in der die Führungsnut verläuft, ist eine zur horizontalen Schwenkachse lotrechte Ebene, also eine vertikal stehende Ebene.

Das Ziel besteht darin, dass ausgehend von einem deaktivierten z.B. horizontal an die Unterseite des Wechselcontainers herangeklapptem, Stützbein das Ausfahren des Arbeitszylinders bis in die vollständig ausgefahrene, aktivierte Position einen Gesamt-Ausfahrweg erfordert, jedoch höchstens 70%, besser höchstens nur 40%. besser höchstens nur 30% des Ausfahrweges benötigt für die vollständige Verschwenkung der Beinstrebe von der deaktivierten in die aktivierte, insbesondere vertikale, Lage erfolgt.

Um diesen Zweck zu erreichen, besitzt die Führungsnut - insbesondere deren Mitte - von der Schwenkachse aus in der Horizontalen gemessen einen größeren Abstand, der bis zu dem kleineren, in der Vertikalen gemessenen Abstand von der Schwenkachse aus abnimmt, vorzugsweise durchgängig abnimmt, insbesondere kontinuierlich abnimmt.

Dadurch wird beim Ausfahren der Aufstandsfläche der Führungszapfen in der Führungsnut von einem hochliegenden, insbesondere dem höchstliegenden, Punkt der Führungsnut zu deren am weitesten von der Schwenkachse entfernten Punkt, nämlich dem anderen Ende des Bogens, verlagert und dadurch die Beinstrebe gegenüber der Führungsnut um die horizontale Schwenkachse nach unten geschwenkt.

Nach Ende des Schwenkvorganges nach unten, also wenn der Führungszapfen den unteren Endpunkt des Bogens erreicht hat, läuft dieser in einem vorzugsweise geraden, vorzugsweise vertikal verlaufenden, Fortsatz der Führungsnut weiter und die Aufstandsfläche bewegt sich weiter nach unten.

Die Richtung dieses Fortsatzes muss nicht unbedingt vertikal sein, denn die Ausfahrrichtung des vollständig herabgeklappten Stützbeines muss nicht unbedingt vertikal sein:
So sind beispielsweise Stützbeine bekannt, die - beispielswese zur Vergrößerung der Stützbasis - schräg nach unten ausfahren.

Ebenso wenig muss die Position des Führungszapfens am höchsten Punkt des Bogens der Führungsnut der waagerechten Stellung der Stützstrebe entsprechen, sondern diese kann sich dann noch in einem spitzen Winkel zur Unterseite des Wechselcontainers befinden.

In diesem Fall erstreckt sich die Führungsnut vom oberen Ende des Bogens vorzugsweise in einem geraden, insbesondere horizontal verlaufenden, Fortsatz der Führungsnut weiter, wodurch die Beinstrebe in ihrer hochgeklappten, vorzugsweise horizontalen, Lage gesichert wird, denn auch ein geringfügiges unbeabsichtigtes Ausfahren der Aufstandsfläche gegenüber der vollständig eingefahrenen Lage führt noch nicht zu einem unerwünschten Beginn des Herabschwenkens der Beinstrebe.

Dementsprechend muss - in Richtung der horizontalen Schwenkachse betrachtet - sich der Bogen der Führungsnut auf derjenigen Seite der Schwenkachse angeordnet sein, in die die Beinstrebe aus der vertikalen Stellung heraus hochgeschwenkt werden soll.

Auf diese Art und Weise kann mittels des Ausfahrantriebes, und damit mittels eines einzigen Antriebes, in einem ersten Ausfalllängen-Abschnitt das Herabschwenken der Beinstrebe bewirkt werden, und dies beendet werden, deutlich bevor die dann noch weiter nach unten ausfahrende Bein strebe, insbesondere deren Aufstandsfläche, den Untergrund erreicht hat.

Falls der Ausfahrantrieb ein elektrischer Antrieb, beispielsweise ein Elektrozylinder ist, umfasst das Stützbein, insbesondere die Beinbasis, vorzugsweise einen Akku für elektrischen Strom, der bevorzugt von Solarzellen gespeist wird, die auf Außenflächen des Wechselcontainers, vorzugsweise auf dessen Oberseite, angebracht sind.

Zusätzlich kann die Beinbasis exzentrisch zu einer aufrechten, insbesondere vertikalen Schwenkachse am Wechselcontainer befestigt sein, sodass die Drehlage um die aufrechte Achse im deaktivierten Zustand eine andere sein kann als im aktvierten Zustand:
So kann die in die Horizontale hochgeschwenkte deaktivierte Beinstrebe meist in oder entgegen der Fahrtrichtung, also in Längsrichtung des Wechselcontainers, verlaufen, beispielsweise von dem Befestigungsbereich der Beinbasis, die in der Aufsicht betrachtet möglichst weit in den Ecken des Wechselcontainers liegt, in Richtung Quermitte des Wechselbehälters.

Wenn in dieser hochgeschwenkten Lage die Beinstrebe unterhalb der in der Aufsicht betrachteten Grundfläche des Wechselcontainers verläuft, und in dieser Lage die Beinstrebe in die Vertikale nach unten geschwenkt wird, könnte die sich innerhalb der Grundfläche des Wechselcontainers befindliche Beinbasis hinderlich sein, beispielsweise für das Einfahren der Ladefläche zum Aufsatteln unter die Wechselcontainer.

### (Ausschwenken um aufrechte Achse)

Mittels einer aufrechten Schwenkachse nahe am äußeren Rand des Containers und einer exzentrisch dazu angeordneten Beinbasis kann die Beinbasis um diese aufrechte Achse vor dem Herabklappen nach außerhalb der Grundfläche des Wechselcontainers geschwenkt werden der Beinstrebe.

Dann steht zwar die Beinstrebe in der zunächst horizontalen Stellung in Richtung Längsmitte unter den Wechselcontainer hinein vor, jedoch befindet sich dann die breiteste Stelle der Ladefläche, nämlich meist die Räder der Ladefläche, hinter der Position der vorderen Stützbeine, und durch das anschließende Herabklappen der Beinstrebe befinden sich die Beinstreben und auch der größte Teil der Beinbasis außerhalb der Grundfläche des Wechselcontainers, was auch noch die Stützbreite vergrößert.

Aus diesem Grund wird eine solche Verschwenkbarkeit der Stützbeine um die aufrechte Achse vorzugsweise an allen vorhandenen Stützbeinen durchgeführt, beispielsweise auch wenn es sich bei dem abzustützenden Container um einen Trailer handelt, der im vorderen Bereich des Kupplungszapfens, also des Königszapfens, für das Abstellen aufgeständert werden muss.

### (Automatisches Schwenken um aufrechte Achse)

Vorzugsweise soll das Schwenken um die aufrechte Achse automatisch beim Einfahren und Ausfahren der Beinstrebe erfolgen.

Hierfür ist zwischen der Beinstrebe und der Schwenkbasis oder dem Trailer oder dem Wechselcontainer eine solche, vorzugsweise mechanische, Wirkverbindung vorhanden, dass beim Einfahren oder Ausfahren der Beinstrebe die Beinbasis gegenüber der Schwenkbasis einschwenkt oder ausschwenkt.

Dabei ist in aller Regel an dem Wechselcontainer oder Trailer eine Schwenkbasis befestigt, meist eine Platte, gegenüber der die Beinbasis und damit das gesamte Stützbein um die aufrechte Achse drehbar befestigt sind.

Die Wirkverbindung umfasst dann vorzugsweise zum Einen ein Zahnkreis-Segment welches an der Beinstrebe drehfest und konzentrisch um die horizontale Schwenkachse herum angeordnet ist.

Zum anderen ist ein Zahnrinnen-Bogen konzentrisch um die aufrechte Achse in der Schwenkbasis so angeordnet, dass die Zähne des Zahnkreis-Segmentes in der an einer Flanke des Zahnrinnen-Bogens vorhandene Verzahnung eingreifen und mit diesen kämmen können.

Die Zähne des Zahnkreis-Segmentes erstrecken sich vorzugsweise durch einen Durchbruch der Beinbasis, insbesondere des horizontalen Schenkels der Beinbasis, hindurch.

Am einfachsten kann der Zahnrinnen-Bogen hergestellt werden, indem ein bogenförmiger Durchbruch in der plattenförmige Schwenkbasis ausgelasert wird.

Die gestellte Aufgabe kann teilweise auch dadurch gelöst werden, dass die Ladefläche des den Wechselcontainer oder Trailer bewegenden Fahrzeuges, also des Lastenfahrrades oder Kleintransporters, in der Höhe veränderbar ist, ohne dass es hierzu einer Luftfederung bedarf.

Insbesondere bei einem Lastenfahrrad können hierfür die die Ladefläche abstützenden, in Querrichtung nebeneinander befindlichen, Räder vorzugsweise jeweils an einer Schwinge gelagert sein, mittels der auch die Federung dieser Räder realisiert ist, beispielsweise mittels eines Torsionsstabes, der die beiden Schwingen auf ihrer Schwingen-Achse miteinander verbindet.

Die Höhenlage der Ladefläche kann gerade dann auf einfache Art und Weise dadurch verändert werden, indem
- entweder die vorzugsweise gemeinsame Schwingen-Achse in ihrer Höhe verlagerbar ist, beispielsweise mittels eines in der Länge veränderbaren Elementes, insbesondere einem Elektrozylinder oder einer Gewindespindel
- oder die Schwenkstellung der Schwinge um die Schwingen-Achse veränderbar ist, was insbesondere ebenfalls mittels eines in der Länge veränderbaren Elementes. insbesondere einem Elektrozylinder oder einer Gewindespindel, realisierbar ist, sofern dieser exzentrisch zur schwingen-Achse an einem daran befestigten Hebel angreift.

Auf diese Art und Weise benötigt der abzustellen der Wechselcontainer lediglich einfache, von einer deaktivierten in eine aktivierte Position und umgekehrt verstellbare, insbesondere für schwenkbare, Stütz Beine, die insbesondere nicht ausfahrbar sein müssen.

### c) Ausführungsbeispiele

Ausführungsformen gemäß der Erfindung sind im Folgenden beispielhaft näher beschrieben. Es zeigen:

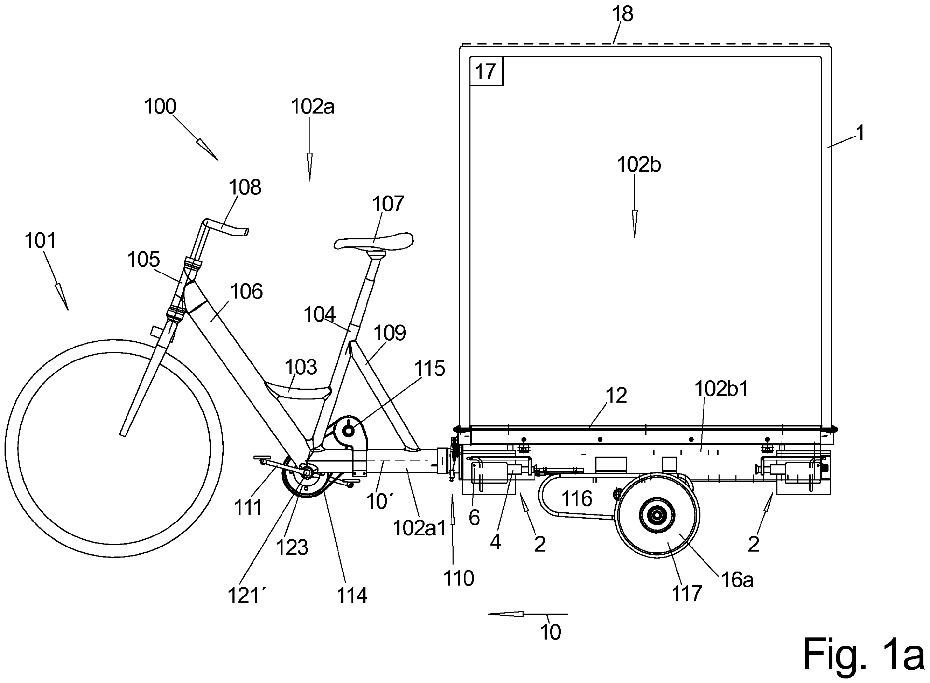

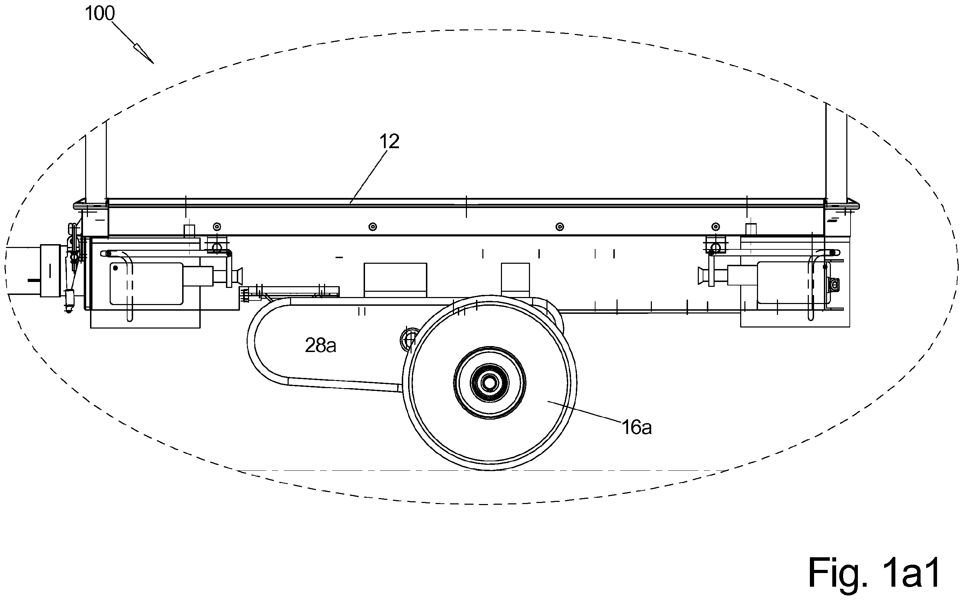

- **Figur 1a:**: ein Lastenfahrrad mit auf der Ladeplattform angeordnetem Wechselcontainer mit hochgeklappten Stützbeinen einer ersten Bauform,
- **Figur 1a1:**: eine Vergrößerung aus Fig. 1a,
- **Figur 1b:**: das beladene Lastenfahrrad der Fig. 1a mit teilweise herabgeklappten Stützbeinen,
- **Figur 1c:**: das beladene Lastenfahrrad der Fig. 1a mit aufgebocktem Wechselcontainer,
- **Figur 1d:**: das Lastenfahrrad teilweise unter dem aufgebocktem Wechselcontainer herausgefahren,
- **Figur 2a - d:**: das Stützbein gemäß Figur 1a in unterschiedlichen Funktionsstellungen,
- **Figur 3a:**: das beladene Lastenfahrrad gemäß Fig. 1a in der Aufsicht,
- **Figur 3b:**: ein Lastenfahrrad mit Sattelkupplung und aufgesatteltem Trailer in der Aufsicht,
- **Figur 4a - c:**: eine zweite Bauform des Stützbeines in der Seitenansicht in unterschiedlichen Funktionsstellungen,
- **Figur 5a:**: das Stützbein gemäß der Figuren 4a - c in der Frontansicht,
- **Figur 5b, c:**: ein Stützbein von oben in unterschiedlichen Funktionsstellungen,
- **Figur 6a - c:**: eine dritte Bauform eines Stützbeines in der Seitenansicht in unterschiedlichen Funktionsstellungen.

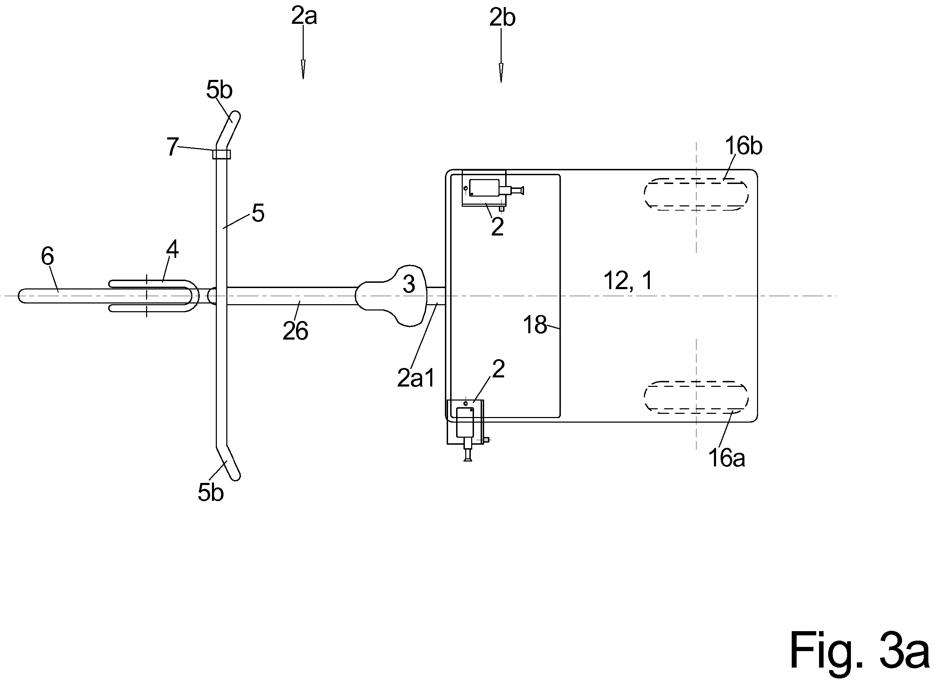

Die **Fig. 1a** **- c** sowie **Fig. 3a** zeigen ein Lastenfahrrad 100 mit einer Ladeplattform 102b2 im hinteren Bereich zum Aufladen einer Last, hier eines Wechselcontainers 1, und an dem Wechselcontainer 1 im unteren Bereich, insbesondere unter dessen Unterseite, in der Aufsicht betrachtet in den Eckbereichen, angeordneten aktivierbaren und deaktivierbaren Stützbeinen 2 zum Abstellen des Wechselcontainers 1 auf dem Untergrund.

Zunächst soll kurz das Lastenfahrrad beschrieben werden:
Es besteht aus einem vorderen Fahrradteil 102a, an den sich hinten ein Lastenteil 102b anschließt, dessen Rahmen eine Ladeplattform 102b1 umfasst, welche sich auf dem Untergrund über zwei nebeneinander angeordnete Räder 117a, b abstützt und auf der Oberseite einen darauf aufgesetzten und verriegelten Wechselcontainer 1 aufnehmen kann.

Das vordere Fahrradteil 102a besitzt einen Rahmen, der sich von dem eines Fahrrades vom vorderen Ende bis einschließlich zum Sattelrohr 104 nicht unterscheidet, umfasst also
- ein Sattelrohr 104 und ein Unterrohr 106, die in der Seitenansicht von der Tretkurbelachse 112 aus V-förmig auseinanderlaufen,
- und in deren unteren Treffpunkt wie üblich auf der Tretkurbelachse 112 die beidseitigen Tretkurbeln 111 befestigt sind, die jeweils ein Pedal tragen und durch Treten ein Kettenrad 113 in Drehung versetzen,
- welches in diesem Fall über eine Kette 114 einen ebenfalls am Rahmen des Fahrradteils 102a angeordneten Generator 115 antreibt.

Sattelrohr 104 und Unterrohr 106 sind durch ein hier sehr tiefliegendes Oberrohr 103 gegeneinander verstrebt, und am oberen Ende des Unterrohres 106 ist wie üblich das Steuerrohr 105 angeschweißt, in dem drehbar die vom Lenker 108 bis zur Gabel für das Vorderrad 101 hindurch verlaufende Vorderrad-Einheit gelagert ist.

Am oberen Ende des Sattelrohres 104 befindet sich wie üblich der Sattel 107, sodass der Fahrer vor der Last, hier dem Wechselcontainer 1, sitzt.

Von dieser unteren Verbindungsstelle von Sattelrohr 104 und Unterrohr 106 aus erstreckt sich ein Unterzug 102a1 in Form eines Rohres horizontal und in Längsrichtung 10 nach hinten, und ist mit der Ladeplattform 102b1 gelenkig verbunden über ein Gelenk 110, welches das relative Verdrehen der Ladeplattform 102b1 um die Längsachse 10' des Unterzuges 102a1 gegenüber diesem ermöglicht.

Die Hinterräder 117a, b sind elektrisch angetrieben oder zumindest elektrisch unterstützt, wobei auch der vom Generator 115 gelieferte Strom dem Elektromotor zugeführt wird oder der Batterie, welche die Hinterräder 117a, b antreibt.

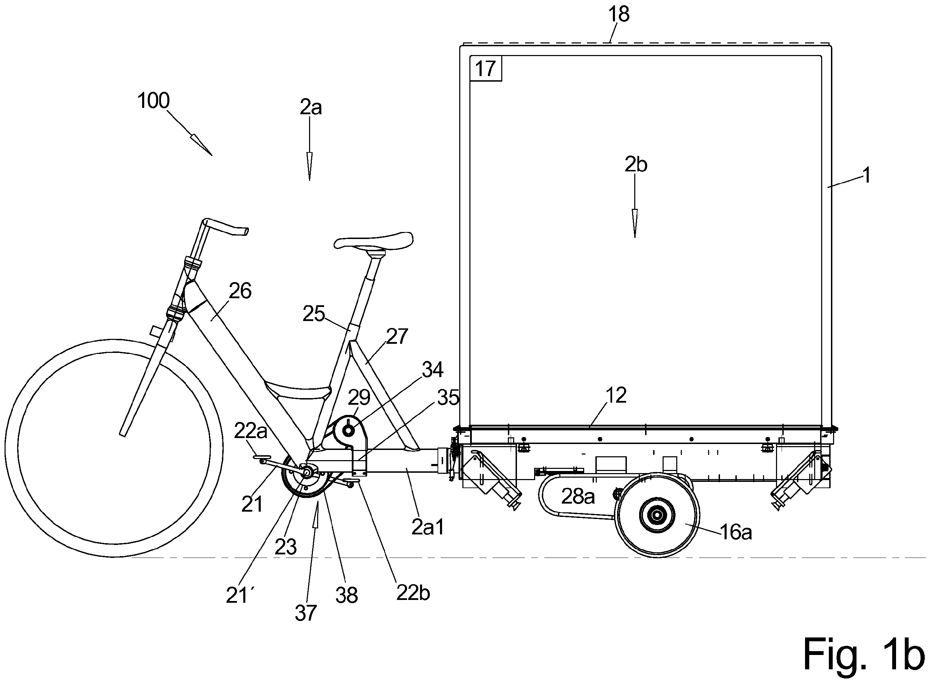

### Jedes der Stützbeine 2 weist eine ausfahrbare Beinstrebe 4 auf und kann von der in Fig. 1a dargestellten Transportstellung, in der die Beinstrebe 4 etwa horizontal verläuft, und jeweils mit ihrem freien Ende und der dortigen Fußplatte 5 in Richtung der Hinterräder 117a, b weist, um eine horizontal in Querrichtung 11 angeordnete Schwenkachse 6 herab geschwenkt werden - wie in Fig. 1b dargestellt - bis die Beinstrebe 4 mit dem freien Ende senkrecht nach unten ragt.

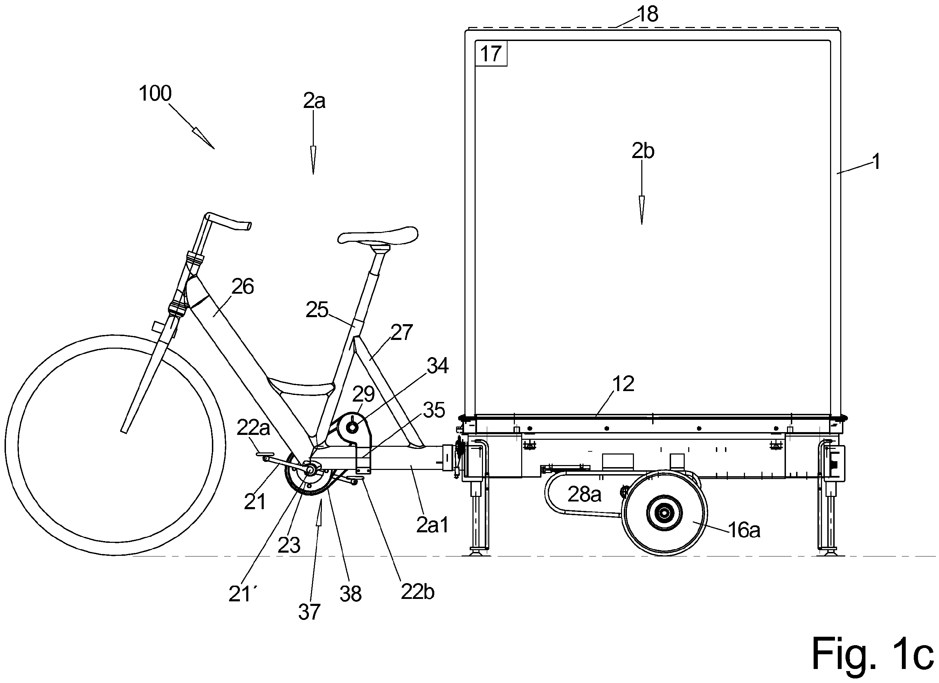

Da die Beinstrebe 4 teleskopierbar und ausfahrbar ist kann sie in dieser vertikalen Stützstellung soweit ausgefahren werden, dass sie den Wechselbehälter 1 - nach Lösen der Verbindung zur Ladeplattform 102b1 - von der Ladeplattform 102b1 abhebt und aufständert, wie in **Fig. 1c** dargestellt.

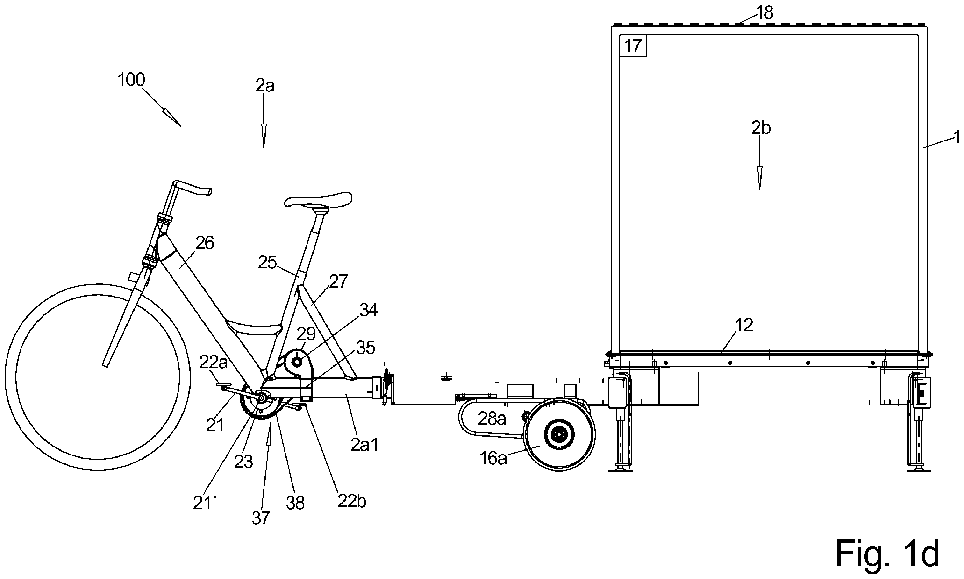

In dieser aufgeständerten Stellung kann das Lastenfahrrad 100 unter dem aufgeständerten Wechselcontainer 1 herausgefahren oder unter diesen eingefahren werden, wie in **Fig. 1d** dargestellt.

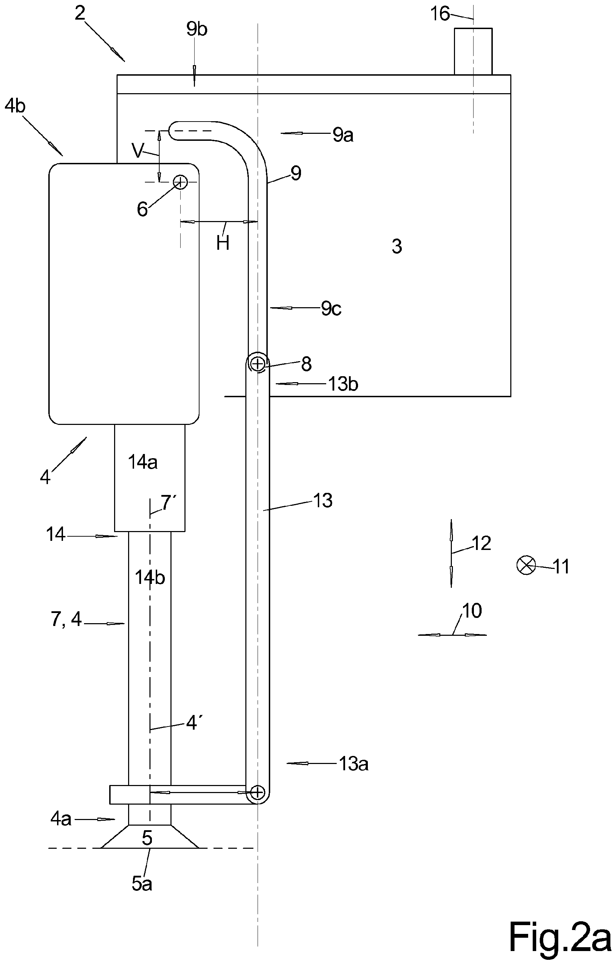

Das Ausfahren und nach unten Schwenken der Stützbeine 2 ebenso wie das Einfahren und nach oben Schwenken wird dabei - wie anhand der **Fig. 2a** - **d** für ein einzelnes Stützbein 2 dargestellt - von ein und demselben Ausfahrantrieb 7, hier einem Arbeitszylinder 14, bewirkt:
Die ausfahrbare Beinstrebe 4 wird dabei gebildet durch den eigentlichen Ausfahrantrieb 7, beispielsweise ein Elektromotor, der fest mit dem Zylinder 14a des Arbeitszylinders 14 verbunden ist, wobei aus dem vom Ausfahrantrieb 7 wegweisenden freien Ende des Zylinders 14a der Kolben 14b ausfahrbar ist, an dessen freien Ende zur Vergrößerung der Aufstandsfläche 5a meist eine Fußplatte 5 befestigt ist.

Diese Beinstrebe 4 ist um eine etwa horizontal verlaufende Schwenkachse 6 schwenkbar gegenüber einer Beinbasis 3 befestigt, die eine etwa vertikal stehende Platte darstellt, die auch der vertikale Schenkel eines L-Profils sein kann, dessen oberer horizontaler Schenkel 3b an der Unterseite des Wechselcontainers 1 auf einfache Art und Weise verschraubt werden kann.

Bei dieser 1. Ausführungsform verläuft In dem vertikalen Teil, insbesondere der vertikalen Platte 3a, der Beinbasis 3, eine L-förmige Führungsnut 9, bestehend aus einem Bogen 9a und einem sich daran nach unten fortsetzenden geradem Fortsatz 9c und optional auch einem sich an das obere Ende des Bogens anschließenden horizontalen Fortsatz 9b. Der Bogen 9a weist also mit seinem unteren Ende vertikal nach unten und verläuft mit seinem oberen Ende horizontal.

Die Schwenkachse 6 ist auf der konkaven Seite des Bogens 9a und zu dieser beabstandet angeordnet, sodass der vertikale Abstand V der Schwenkachse 6 zu der Mitte des oberen Endes des Bogens 9 und damit auch der horizontal verlaufenden Mitte des oberen horizontalen Fortsatzes 9b kleiner ist als der horizontale Abstand H der Schwenkachse 6 zu der Mitte des unteren Endes Bogens 9a und damit auch der Mitte des nach unten weisenden vertikalen Fortsatzes 9c der Führungsnut 9.

Nahe des freien Endes der Beinstrebe 4, also nahe der Fußplatte 5, ragt eine Querstrebe 15, die mit dem ausfahrbaren Kolben 14b fest verbunden ist, radial von diesem ab und ist an ihrem freien äußeren Ende gelenkig mit einem Ende einer Führungstrebe 13 verbunden, die etwa parallel zum Kolben 14b verläuft und an ihrem anderen Ende eine von der Führungsstrebe 13 seitlich so abstrebenden und überstehenden Führungszapfen 8 trägt, dass dieser in die Führungsnut 9 passt und in dieser verfahrbar ist und auch gegen ein Herausbewegen seitlich, also quer zur Hauptebene der Führungsnut 9, gehindert ist.

Bei vollständig ausgefahrenem und vertikal nach unten weisendem Kolben 14b gemäß **Fig. 2a** befindet sich der Führungszapfen 8 im unteren Ende der Führungsnut 9, also im unteren Ende des vertikalen Fortsatzes 9c der Führungsnut 9.

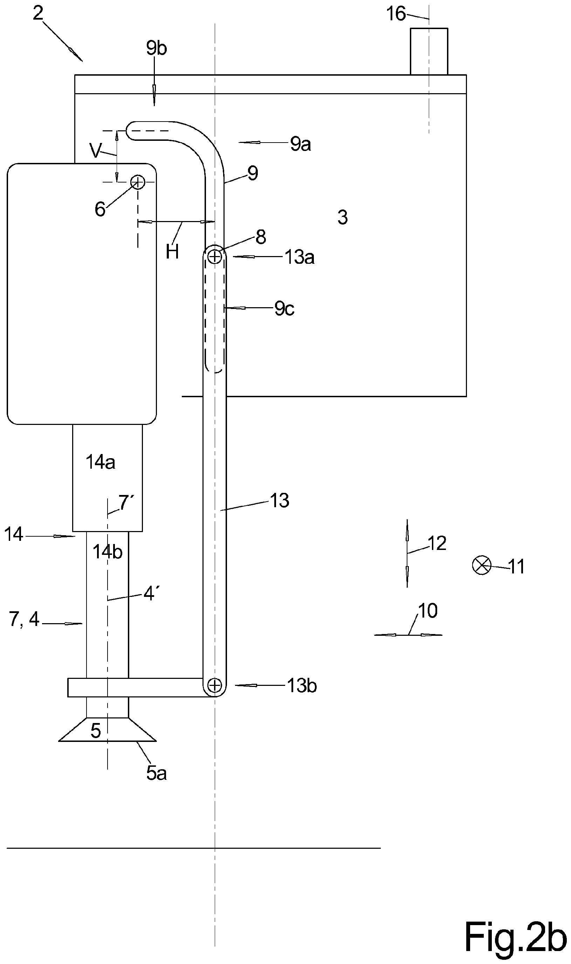

Wird nun beginnend von dieser Stellung aus der Kolben 14b in den Zylinder 14a eingefahren mit Hilfe des Ausfahrantriebes 7 - der natürlich auch ein Einfahren bewirken kann - so bewegt sich der Führungszapfen 8 in der Führungsnut 9, also dem vertikalen unteren Fortsatz 9c, nach oben, bis er den Übergang des unteren vertikalen Fortsatzes 9c zum Bogen 9a erreicht, wie in **Fig. 2b** dargestellt. Bis dahin bleibt auch der Arbeitszylinder 14 in seiner vertikalen Ausrichtung.

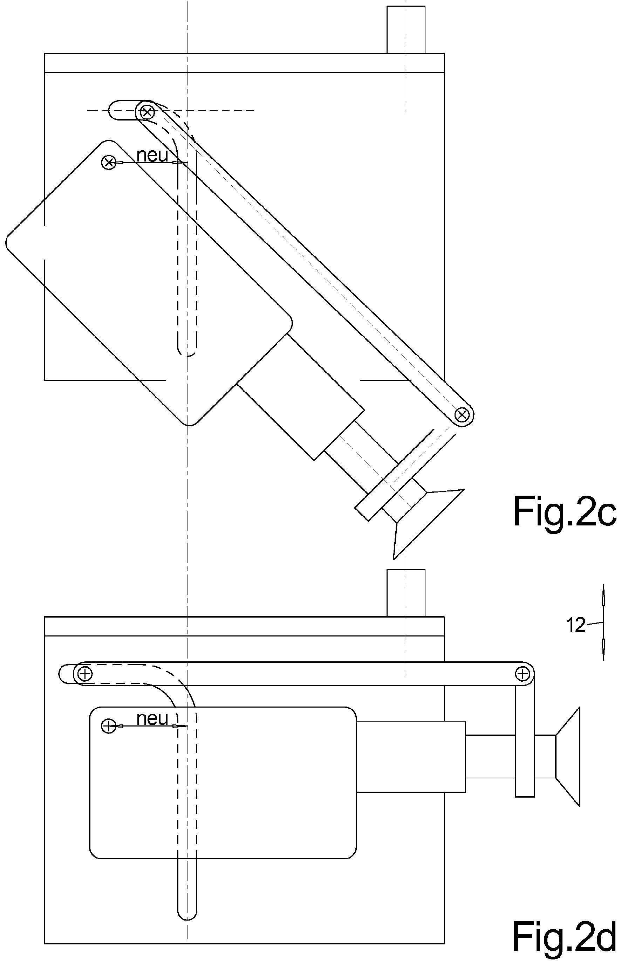

Wird der Kolben 14b gemäß **Figur 2c** weiter eingefahren, und der Führungszapfen 8 gelangt in den Bereich des Bogens 9a der Führungsnut, so wird dadurch die gesamte Beinstrebe 4 zunehmend um die horizontale Schwenkachse 6 verschwenkt.

Dabei ist der Bogen 9a so gestaltet und erstreckt sich, insbesondere über ein solches Winkelsegment von vorzugsweise 90°, dass sich die Beinstrebe 4 in der vollständig angehobenen, insbesondere einer horizontalen Verlaufsrichtung befindlichen, deaktivierten Position befindet, wenn der Führungszapfen 8 den Übergang zwischen dem Bogen 9a und dem horizontalen Fortsatz 9b erreicht hat.

Bei weiterem Einfahren des Kolbens 4a gemäß **Fig. 2d** bewegt sich der Führungszapfen 8 weiter in den horizontalen Fortsatz 9b der Führungsnut 9 hinein, was eine Sicherung gegen das Herabschwenken der Beinstrebe 4 darstellt für den Fall, dass der Kolben14b unabsichtlich eine geringe Strecke aus dem Zylinder 14a ausgefahren werden sollte.

Auf diese Art und Weise kann mittels nur eines einzigen Antriebes, des Ausfahrantriebes 7, ausgehend von der vollständig ausgefahrenen Stellung des Arbeitszylinders 14 zunächst der Kolben 14b vertikal eingefahren werden und ab einem bestimmten Maß des Einfahrens dann erst gleichzeitig das Hochschwenken der Beinstrebe 4 bewirkt werden, ggfs. mit einer zusätzlichen Sicherung gegen zu frühes Herabschwenken.

Es versteht sich von selbst, dass der Ausfahrantrieb 7 stark genug ist, um bei dem umgekehrten Ablauf mit einer solchen Kraft beim Ausfahren der Kolbenstange 14 gegen den Untergrund zu drücken, dass die vier Beinstreben 2 in Summe in der Lage sind, den aufzuständernden Wechselcontainer 1 hochzustemmen.

Die **Figuren 2a** - **d** zeigen auch den aufrechten, insbesondere vertikalen, als Schwenkachse 16 dienenden nach oben ragenden Lagerzapfen 19, der über die Oberkante oder Oberseite des Restes der Beinbasis 3 vorsteht und der Lagerung in der Unterseite des Wechselcontainers 1 oder einer separaten Schwenkbasis 23, wie in den folgenden Figuren dargestellt, die fest an dem Wechselcontainer verschraubt wird - dient.

Die aufrechte Schwenkachse 16 befindet sich dabei in einem horizontalen Abstand zu dem in der herabgeklappten, aktivierten Stellung der Beinstrebe 4 und deren Verlaufsrichtung und Ausfahrrichtung 7', insbesondere in einem horizontalen Abstand zur horizontalen Schwenkachse 6.

Auf diese Art und Weise kann - wie in der **Fig. 3a** in der Aufsicht dargestellt - um diese aufrechte Achse 16 die Beinstrebe 4 nach außen geschwenkt werden, damit sie sich insbesondere im herabgeklappten, aktivierten Zustand außerhalb der Grundfläche des Wechselcontainers 1 befindet, und damit die Hinterräder 117a, b des Lastenfahrrades 100 nicht gegen die aktivierten Beinstreben 2 fahren können.

In **Fig. 3a** ist das in Fahrtrichtung linke, also untere Stützbein 2 bereits nach radial seitlich außen verschwenkt, während sich die in Fahrtrichtung rechten, also oberen, Stützbeine 2 noch in der eingeschwenkten Transportlage innerhalb, vorzugsweise unterhalb, der Grundfläche des Wechselcontainers 1 befinden.

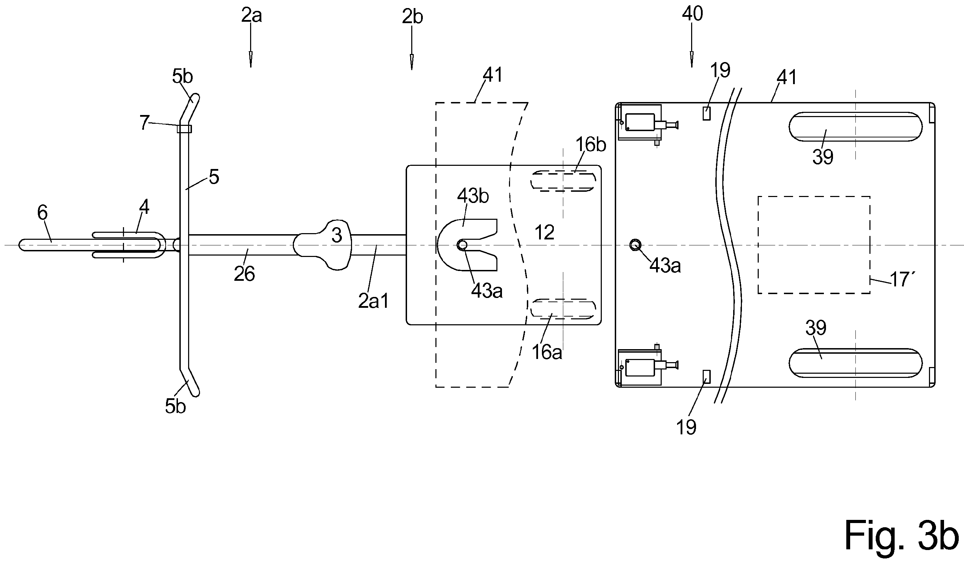

**Fig. 3b** zeigt in der Aufsicht die Anordnung der Stützbeine 2 in den in der Aufsicht vorderen Eckbereichen eines Trailers 1', der bereits mit aktivierten Stützbeinen 2 aufgebockt ist und das Lastenfahrrad 100, welches auf seiner Ladeplattform die Sattelkupplung zum Einrasten des Königszapfens des Trailers aufweist, bereits unter dem Trailer 1' herausgefahren ist.

Da bei dieser Trailer-Lösung der Abstand der Hinterräder 117a, b des Lastenfahrrades 100 in der Regel deutlich kleiner ist als der Abstand der Hinterräder des Trailers 1', besteht hier kaum die Gefahr einer Kollision der Hinterräder 117a, b mit den Stützbeinen 2 des Trailers 1', weshalb in diesem Fall auf eine Ausschwenkbarkeit der Stützbeine 2 um die aufrechte Achse 16 nach außen in der Regel verzichtet werden kann.

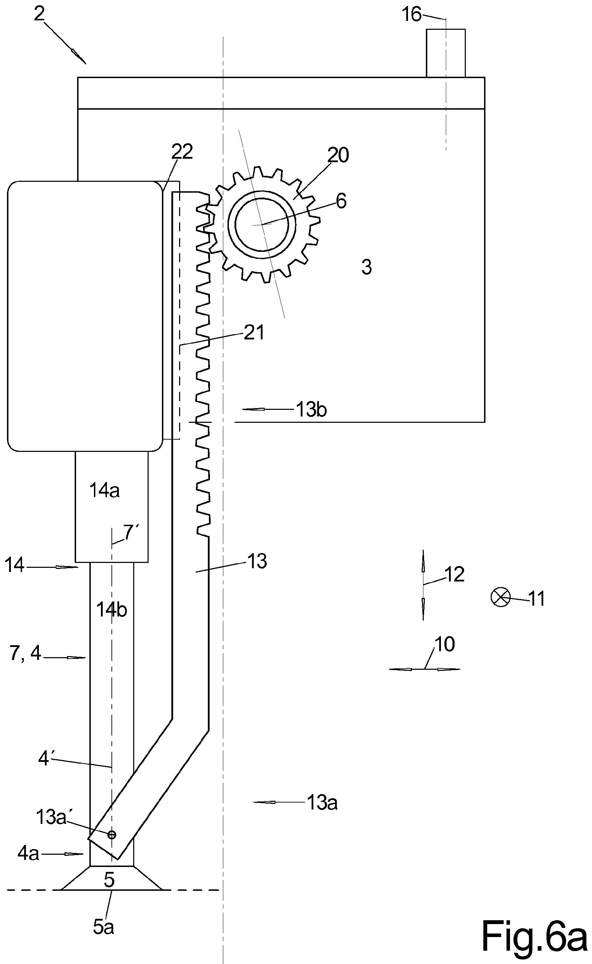

Die **Figuren 6a** **bis c** zeigen eine 2. erfindungsgemäße Bauform:
Im Unterschied zu den Figuren 2a bis d besitzt hier die Koppelstrebe 13 in ihren hinteren, vom freien Ende und der Befestigung gegenüber dem freien Ende der Beinstrebe 4 auf einer Seite eine Verzahnung, also ausgebildet als Zahnstange 21, die mit einem konzentrisch um die horizontale Schwenkachse 6 herum an der Beinbasis 3 angeordneten Ritzel 20 kämmt.

Bewegt sich aufgrund des Verkürzens der Beinstrebe 4 die Koppelstrebe 13 und damit die Zahnstange 21 tangential entlang des Ritzels 20, so verschwenkt dadurch die Beinbasis 3 gegenüber der Beinstrebe 4, da das Ritzel 20. drehfest mit der Beinbasis 3 verbunden ist.

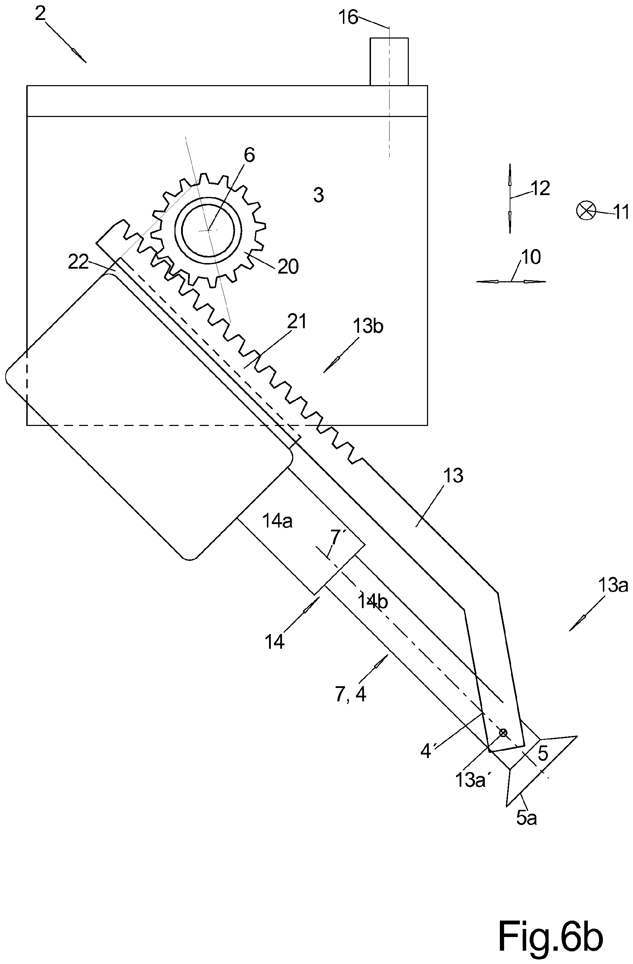

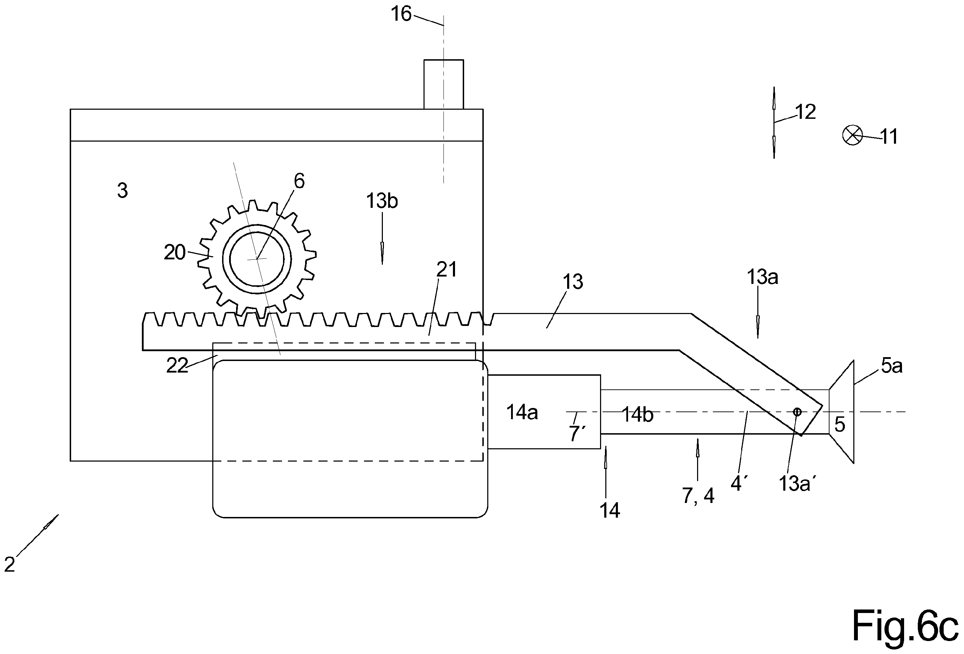

Der wirksame Durchmesser des Ritzels 20 ist dabei so bemessen, dass zwischen der vollständig eingefahrenen und der vollständig ausgefahrenen Stellung der Beinstrebe 4 diese eine 90°-Schwenkbewegung um die Beinbasis 3 vollzieht, wie in den **Figuren 6a****,** **b****,** **c** in verschiedenen Schwenkstellungen dargestellt.

Da die Beinbasis 3 an, meist unter, dem Wechsel Container 1 befestigt ist, stellt dies ein Hochschwenken oder Herabschwenken des Stützbeines 2 dar.

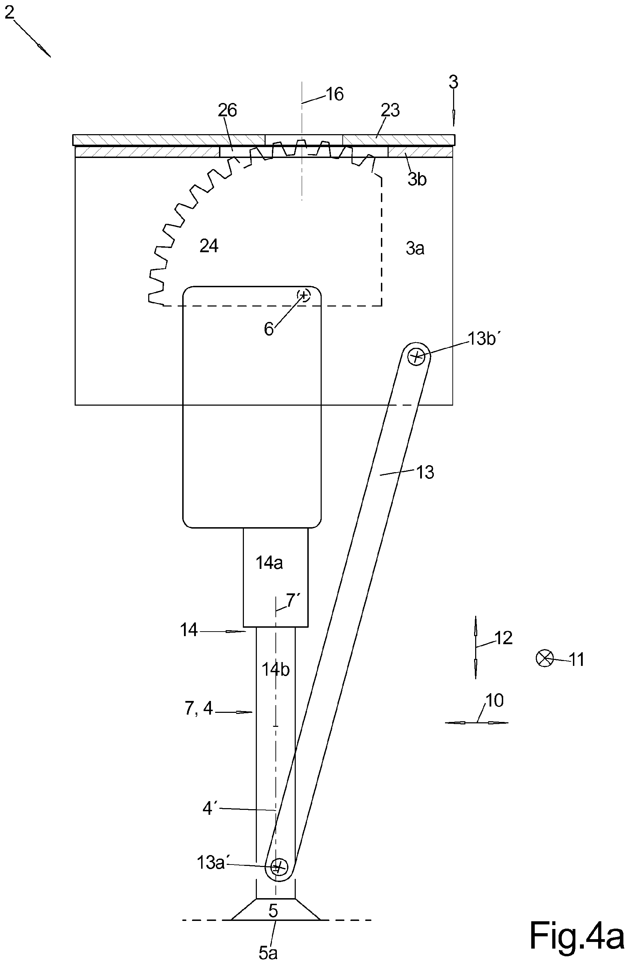

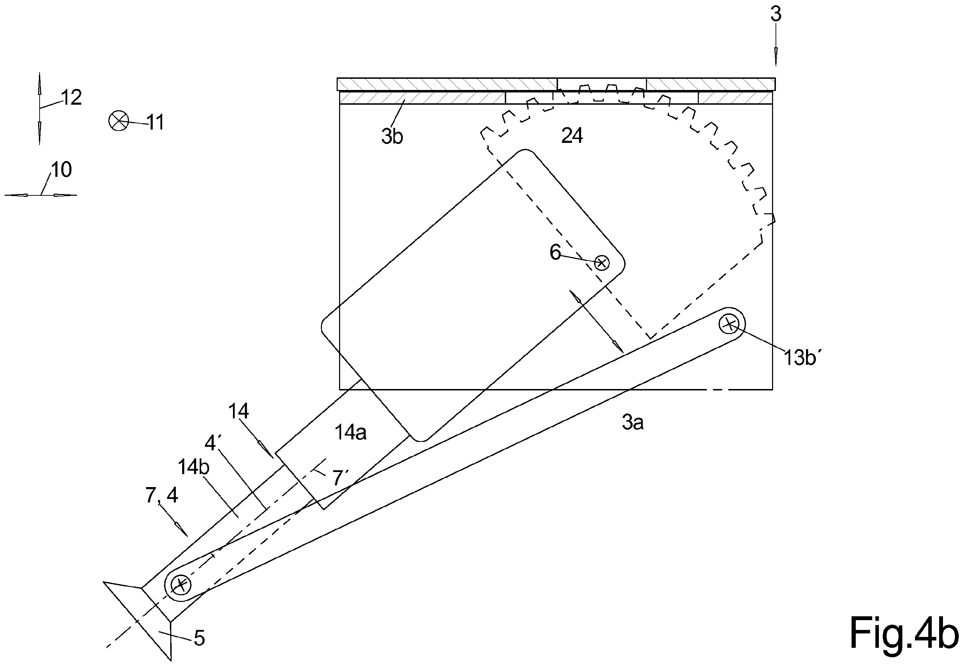

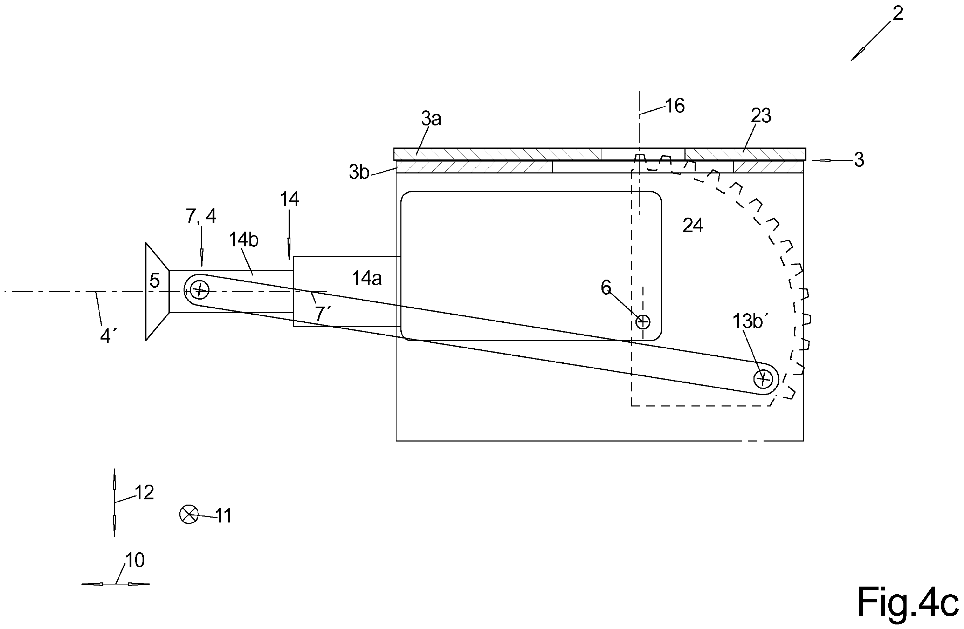

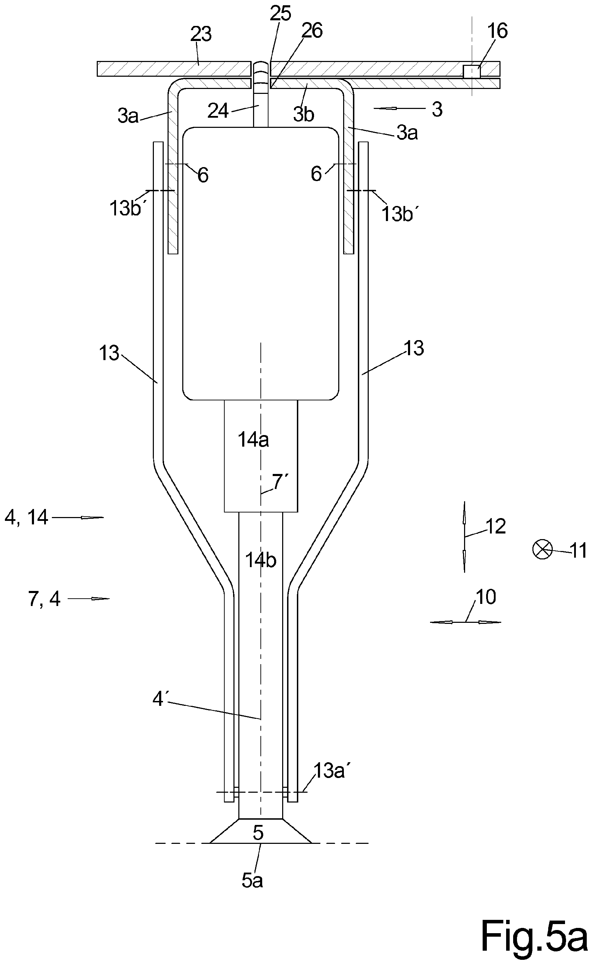

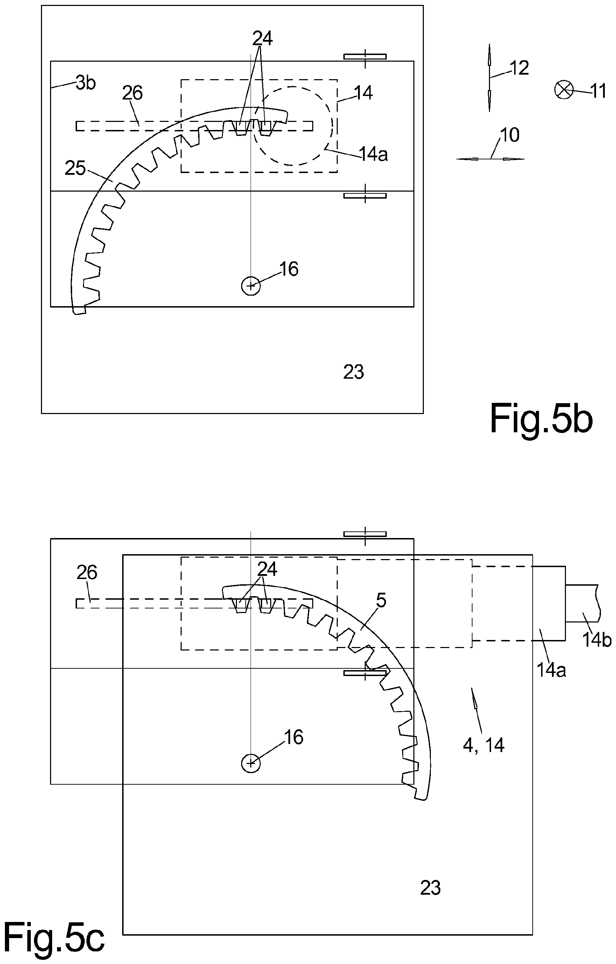

Die **Figuren 4a** **bis c,** in der verschiedene Schwenkstellungen in der Seitenansicht dargestellt sind, sowie die **Figur 5a****,** in der das gleiche Stützbein 2 in der Frontansicht dargestellt ist, zeigen eine 3. erfindungsgemäße Bauform:
Dabei ist das hintere Ende der Koppelstrebe 13 im Abstand zur horizontalen Schwenkachse 6 gelenkig um eine Schwenkachse 13b' an der Beinbasis 3 befestigt, wobei diese Schwenkachse 13b' parallel zur Schwenkachse 13a' verläuft, die am freien Ende die Koppelstrebe 13 mit dem freien Endbereich der Beinstrebe 4 verbunden ist.

Auch dadurch wird beim Einfahren oder Ausfahren der Beinstrebe 4 mittels der Koppelstrebe 13 automatisch eine Verschwenkung der Beinbasis 3 gegenüber der Beinstrebe 4 um die horizontale Schwenkachse 6 bewirkt, wie in den verschiedenen Schwenkstellungen der **Figuren 4a** **bis c** ersichtlich.

**Figur 5a** zeigt darüber hinaus, dass die Koppelstrebe 13 beidseits an der in der Frontansicht symmetrisch ausgebildeten Beinstrebe 4 und Beinbasis 3 angeordnet ist, wobei die Beinbasis 3 in diesem Fall aus einem U-förmig gekröpften, nach unten offenen Blechbiege-Teil besteht mit einem horizontalen Schenkel b, von dessen seitlichen Enden die beiden frei endenden vertikalen Schenkel 3a nach unten ragend.

Die **Figuren 4a** **bis c** sowie **Figuren 5a** **bis c** zeigen darüber hinaus eine Möglichkeit, wie das Stützbein 2 - wiederum bewirkt nur durch das Verlängern oder Verkürzen, also Ausfahren oder einfahren, der Beinstrebe 4 - auch das Verschwenken des Stützbeines 2 um die aufrechte Schwenkachse 16 automatisch vollzogen werden kann, wobei die nachfolgend beschriebene Lösung auch für die anderen vorher beschriebenen Bauformen gemäß der **Figuren 2 a bis d** **und** **6a bis c** anwendbar ist:

Hierfür ist am oberen, hinteren Ende der Beinstrebe 4 ein Zahnkreis-Segment 24 befestigt, dessen Zahnkreis konzentrisch um die horizontale Schwenkachse 6 verläuft.

Die Zähne dieses Zahnkreis-Segmentes 24 stehen in Eingriff mit einem Zahnrinnen-Bogen 25, der wie in den **Figuren 5a** **bis c** in der Aufsicht von oben dargestellt in einer in diesem Fall separaten, plattenförmigen Schwenkbasis 23 ausgebildet ist, gegenüber welcher die Beinbasis 3 um die aufrechte Achse 16 schwenkbar ist.

Dies ist fertigungstechnisch einfacher, als den Zahnrinnen-Bogen 25 direkt beispielsweise in der Unterseite des Wechselcontainers 1 anzuordnen, da die separate Herstellung dieser Schwenkbasis 23 und deren Verschraubung an der Unterseite des Wechselcontainers 1 wesentlich einfacher und kostengünstiger ist.

Wie die **Figuren 5a** **bis c** erkennen lassen, wandert der Eingriffspunkt zwischen den Zähnen des Zahnkreis-Segmentes 24 und den Zähnen des Zahnrinnen-Bogens 25 entlang des sich über 90° erstreckenden Zahnrinnen-Bogens 25, wenn sich das Zahnkreissegment 24 um 90° um die horizontale Achse 6 Verschwenkt beim Einfahren oder Ausfahren der Beinstrebe 4.

Zu diesem Zweck befindet sich in dem horizontalen Schenkel 3b der Beinbasis 3 ein in Richtung der in **Figur 5a** in der Frontansicht ersichtlichen Symmetrieebene des Stützbeines 2 verlaufender schlitzförmiger Durchbruch 26, durch den die Zähne des Zahnkreissegmentes 24 hindurch ragen und in den Zahnrinnen-Bogens 25 der darüber liegenden Schwenkbasis 23 hineinragen und mit der dort - an einer der Flanken diese Rinne vorhandenen Verzahnung oder auch am Grunde der Rinne vorhandenen - Verzahnung in Eingriff stehen können.

Die Verzahnung an einer der Flanken des bogenförmigen Durchbruches herzustellen ist wesentlich kostengünstiger, da dies durch einfaches Auslasern eines entsprechenden bogenförmigen Durchbruches mit Verzahnung in einem Arbeitsgang in der plattenförmigen, ebenen Schwenkbasis 23 erreicht werden kann.

Der mittlere, horizontale Schenkel 3b der Beinbasis 3 ist über die seitlichen vertikalen Schenkel 3a hinaus auf einer Seite verlängert, um den notwendigen Abstand für die gelenkige Verbindung durch die aufrechte Achse 16 zur Schwenkbasis 23 gegenüber dem Zahnrinnen-Bogen 25 zu schaffen, die notwendig ist, damit eine 90°-Verschwenkung um die horizontale Schwenkachse 6 auch möglichst genau eine 90°-Verschwenkung um die aufrechte Achse 16 ergibt.

### BEZUGSZEICHENLISTE

- 1: Wechselcontainer
- 1': Trailer
- 2: Stützbein
- 3: Beinbasis
- 3a: horizontaler Schenkel
- 3b: vertikale Schenkel
- 4: Beinstrebe
- 4': Haupterstreckungs-Richtung
- 5: Fußplatte
- 5a: Aufstandsfläche
- 6: horizontale Schwenkachse
- 7: Ausfahrantrieb
- 7': Ausfahrrichtung
- 8: Führungszapfen
- 9: Führungsnut
- 9a: Bogen
- 9b, c: Fortsatz
- 10: Fahrtrichtung
- 11: horizontale Querrichtung
- 12: Vertikale
- 13: Führungsstrebe
- 13': Querachse
- 13a, b: Endbereich
- 14: Arbeitszylinder
- 15: Querstrebe
- 16: aufrechte Schwenkachse
- 17: Akku
- 18: Solarzelle
- 19: Lagerzapfen
- 20: Ritzel
- 21: Zahnstange
- 22: Führung
- 23: Schwenkbasis
- 24: Zahn-Segment
- 25: Zahnrinnen-Bogen
- 26: Durchbruch

- 100: Lastenrad
- 101: Vorderrad
- 102: Rahmen
- 102a: Vorderteil
- 102b: Lastenteil
- 102a1: Unterzug
- 102b1: Ladeplattform
- 103: Oberrohr
- 104: Sattelrohr
- 105: Steuerrohr
- 106: Unterrohr
- 107: Sattel
- 108: Lenker
- 109: Strebe
- 110: Gelenk
- 111: Tretkurbel
- 112: Kurbelachse
- 113: Kettenrad
- 114: Kette
- 115: Generator
- 116: Schwinge
- 117a,b: Hinterrad

## Patentansprüche

1. **Wechselcontainer** (1) oder Trailer (1'), für ein Lastenfahrrad (100), mit verschwenkbaren und ausfahrbaren Stützbeinen (2), wobei
- in der Aufsicht betrachtet in den Außenbereichen im unteren Bereich bei einem Trailer (1') mindestens zwei, bei einem Wechselcontainer (1) mindestens drei, besser vier, Stützbeine (2) angeordnet sind,
- jedes Stützbein (2)
- eine am Wechselcontainer (1) oder Trailer (1') befestigte Beinbasis (3),
- eine sich von der Beinbasis (3) weg erstreckende Beinstrebe (4) sowie
- am freien Ende (4a) der Beinstrebe (4) eine Aufstandsfläche (5a), insbesondere eine Fußplatte (5),
umfasst,
- die Beinstrebe (4) um eine horizontal verlaufende Schwenkachse (6) gegenüber der Beinbasis (3) verschwenkbar ist,
- die Länge (L) des Stützbeines (2) von der Schwenkachse (6) zur Aufstandsfläche (5a) mittels eines Ausfahrantriebes (7) in einer Ausfahrrichtung (7') veränderbar ist, insbesondere die Beinstrebe (4) in ihrer Haupterstreckungsrichtung (4') ausfahrbar ist,
**dadurch gekennzeichnet, dass**
der freie Endbereich (4a) der Beinstrebe (4) mit der Beinbasis (3) über eine solche Wirkverbindung gekoppelt ist, dass beim Verringern der Länge (L) der Beinstrebe (4) die Beinstrebe (4) automatisch um die horizontale Schwenkachse (6) relativ zur Beinbasis (3) nach oben schwenkt und umgekehrt.

2. Wechselcontainer oder Trailer nach Anspruch 1,
**dadurch gekennzeichnet, dass**
- die Wirkverbindung eine Koppelstrebe (13) ist, die mit ihrem einen Endbereich (13a), vorzugsweise gelenkig um eine Querachse (13a') zur Ausfahrrichtung (7'), mit dem freien Endbereich (4a) der Beinstrebe (4), insbesondere der Fußplatte (5), verbunden ist,
- im Falle des Vorhandenseins eines Arbeitszylinders (14) als Beinstrebe (4), mit dem den freien Endbereich (4a) der Beinstrebe (4) darstellenden Teil des Arbeitszylinders (14), also Zylinder (14a) oder Kolben (14b), verbunden ist,
- insbesondere der Ausfahrantrieb (7) einen Arbeitszylinder (14), insbesondere einen Elektrozylinder, Pneumatikzylinder oder Hydraulikzylinder, umfasst.
(Lösung Verzahnung Koppelstrebe)

3. Wechselcontainer oder Trailer nach Anspruch 2, **dadurch gekennzeichnet, dass**
- die Koppelstrebe (13) in ihrem anderen Endbereich (13b) als Zahnstange (21) ausgebildet ist, die in Ausfahrrichtung (7') verläuft und
- ein damit kämmendes Ritzel (22) konzentrisch zur horizontalen Schwenkachse 6) angeordnet und drehfest mit der Beinbasis (3) verbunden ist.

4. Wechselcontainer oder Trailer nach nach einem der Ansprüche 2 oder 3, **dadurch gekennzeichnet, dass** die Koppelstrebe eine Führungsstrebe ist, die Führungstrebe (13)
- entweder drehfest mit dem freien Endbereich (4a) der Beinstrebe (4) verbunden ist
- oder gelenkig mit diesem Endbereich (4a) verbunden ist und die Zahnstange (21) mittels einer Führung (22) in Ausfahrdichtung (7') an der Beinstrebe (4) geführt ist.
(Lösung Führungszapfen exzentrisch zu Schwenkpunkt an Basis 3)

5. Wechselcontainer oder Trailer nach einem der Ansprüche 2 bis 4, **dadurch gekennzeichnet, dass**
- die Koppelstrebe (13) in ihrem anderen Endbereich (13b) im Abstand zur Schwenkachse (6) gelenkig mit der Beinbasis (3) verbunden ist,
- insbesondere der Abstand so bemessen ist, dass die Längenveränderung der Beinstrebe (4) zwischen der maximalen und der minimalen Länge eine Verschwenkung der beinstrebe (4) gegenüber der Beinbasis (3) um 90° bewirkt.
(Lösung Führungszapfen in Nut)

6. Wechselcontainer oder Trailer nach einem der Ansprüche 2 bis 5, **dadurch gekennzeichnet, dass**
- die Koppelstrebe (13) in ihrem anderen Endbereich (13b) einen Führungszapfen (8) aufweist,
- in der Beinbasis (3) eine Führungsnut (9) ausgebildet ist, in welcher der Führungszapfen (8) geführt ist, die um die horizontale Schwenkachse (6) herum wenigstens teilweise in einem Bogen (9a) verläuft,
von der horizontalen Schwenkachse (6) zur Mittellinie der Führungsnut (9) der in der Horizontalen (10, 11) gemessene Horizontalabstand (H) größer ist als der in der Vertikalen (12) gemessene oder der bis zum höchsten Punkt der Führungsnut (9) gemessene Vertikalabstand (V),
- der Bogen (9a) der Führungsnut (9) auf derjenigen Seite der horizontalen Schwenkachse (6) ausgebildet ist, zu der in der die Beinstrebe (4) aus der vertikalen Stellung heraus hochgeschwenkt werden soll.

7. Wechselcontainer oder Trailer nach Anspruch 6, **dadurch gekennzeichnet, dass**
- der Bogen (9a) sich über 90° erstreckt
und/oder
- der Bogen (9a) ein Kreisbogen ist.

8. Wechselcontainer oder Trailer nach einem der nach einem der Ansprüche 6 oder 7, **dadurch gekennzeichnet, dass**
- sich an das obere Ende des Bogens (9a) ein gerader, insbesondere horizontaler Fortsatz (9b) der Führungsnut (9) anschließt,
und/oder
- sich an das untere Ende des Bogens (9a) ein aufrechter gerader, insbesondere vertikaler Fortsatz (9c) der Führungsnut (9) anschließt.

9. Wechselcontainer oder Trailer nach einem der Ansprüche 6 bis 8, **dadurch gekennzeichnet, dass**
der Führungszapfen (8) an dem einen Endbereich (13a) einer Führungstrebe (13) ausgebildet ist, die im anderen Endbereich (13b) entweder mit dem freien Ende der Beinstrebe (4), insbesondere der Fußplatte (5), verbunden ist oder im Falle des Vorhandenseins eines Arbeitszylinders (14) mit dem das freie Ende der Beinstrebe (4) aufweisenden Teil des Arbeitszylinders (14), also Zylinder (14a) oder Kolben (14b).
und / oder
- bei einem Lastenfahrrad (100) beide Stützbeine (2) horizontal ausschwenkbar sind.

10. Wechselcontainer oder Trailer nach einem der vorhergehenden Ansprüche,
**dadurch gekennzeichnet, dass**
bei einem elektrischen Ausfahrantrieb (7)
- das Stützbein (2) einen elektrischen Akku (17) umfasst,
- insbesondere an dem Wechselcontainer (1) oder Trailer (1'), insbesondere auf dessen Oberseite (1b), stromerzeugende Solarzellen (18) angeordnet sind.
(Ausschwenken um aufrechte Achse)

11. Wechselcontainer oder Trailer nach einem der vorhergehenden Ansprüche,
**dadurch gekennzeichnet, dass**
- die Beinbasis (3) um eine aufrechte Achse (16), insbesondere eine vertikale Achse (16), schwenkbar am Wechselcontainer (1) oder Trailer (1') oder einer damit fest verbundenen, meist plattenförmigen, Schwenkbasis (23) befestigt ist und
- insbesondere die aufrechte Achse (16) beabstandet zur Schwenkachse (6) angeordnet ist.

12. Wechselcontainer oder Trailer nach Anspruch 11, **dadurch gekennzeichnet, dass**
- die aufrechte Achse (16) in der Aufsicht betrachtet innerhalb der Grundfläche (1") des Wechselcontainers (1) oder Trailers (1') angeordnet ist und
- bei horizontalem Ausschwenken die Beinbasis (3) wenigstens teilweise außerhalb des Wechselcontainers (1) positionierbar ist, insbesondere in Querrichtung (10) außerhalb oder in Fahrtrichtung (10) außerhalb.
(Automatisches Schwenken um aufrechte Achse)

13. Wechselcontainer oder Trailer nach einem der vorhergehenden Ansprüche,
**dadurch gekennzeichnet, dass**
- zwischen der Beinstrebe (4) und der Schwenkbasis (23) oder dem Trailer (2) oder dem Wechselcontainer (1) eine solche, vorzugsweise mechanische, Wirkverbindung vorhanden ist, die beim Einfahren oder Ausfahren der Beinstrebe (4) die Beinbasis (3) gegenüber der Schwenkbasis (23) einschwenkt oder ausschwenkt,
- insbesondere die Wirkverbindung umfasst
- ein Zahnkreis-Segment (24) welches an der Beinstrebe (4) drehfest und konzentrisch um die horizontale Schwenkachse (6) herum angeordnet ist,
- ein Zahnrinnen-Bogen (25) konzentrisch um die aufrechte Achse (16) in der Schwenkbasis (23) so angeordnet ist, dass
- die Zähne des Zahnkreis-Segmentes (24) in der an einer Flanke des Zahnrinnen-Bogens (25) eingreifen und mit diesen kämmen können.

14. Wechselcontainer oder Trailer nach Anspruch 13, **dadurch gekennzeichnet, dass**
- der Zahnrinnen-Bogen (25) ein bogenförmige Durchbruch in der plattenförmige Schwenkbasis (23) ist
und/oder
- die Zähne des Zahnkreis-Segmentes (24) sich durch einen Durchbruch (26) der Beinbasis (3), insbesondere des horizontalen Schenkels (3a) der Beinbasis (3), hindurch erstrecken.

15. **Lastenfahrrad** (100) mit
- einer Ladeplattform (102b1) mit darauf befindlichem Wechselcontainer (1),
- Rädern, insbesondere Hinterrädern (117), zum Abstützen der Ladeplattform (102b1),
- wobei der Wechselcontainer (1) zwischen einer deaktivierten und einer aktivierten, gegenüber dem Untergrund abstützenden Position verstellbare Stützbeine (2) aufweist
**dadurch gekennzeichnet, dass**
- der Wechselcontainer (1) nach einem der vorhergehenden Ansprüche ausgebildet ist

16. Lastenfahrrad (100) nach Anspruch 15,
wobei die Räder an einer Schwinge (116) angeordnet sind,
**dadurch gekennzeichnet, dass**
die Ausfahrelemente zwischen der Ladeplattform (102b1) einerseits und entweder der Schwinge (116) oder den Rädern andererseits angeordnet sind.

## Claims

1. **A container swap body** (1) or trailer (1'), for a cargo bike (100), with pivotable and extendable support legs (2), wherein
- viewed in plan view, in the outer areas at least two support legs (2) are arranged in the lower area in the case of a trailer (1') and at least three, preferably four, in the case of a swap container (1),
- each support leg (2) contains
- a leg base (3) attached to the swap container (1) or trailer (1'),
- a leg rod (4) extending away from the leg base (3) and
- at the free end (4a) of the leg rod (4) a contact surface (5a), in particular a foot plate (5),
- the leg rod (4) can be pivoted relative to the leg base (3) about a horizontally extending pivot axis (6),
- the length (L) of the support leg (2) can be changed from the pivot axis (6) to the support surface (5a) in an extension direction (7') by means of an extension drive (7), in particular the leg strut (4) can be extended in its main extension direction (4'),
**characterized in that**
the free end (4a) of the leg rod (4) is coupled to the leg base (3) via such an operative connection that when the length (L) of the leg rod (4) is reduced, the leg rod (4) automatically pivots upwards about the horizontal pivot axis (6) relative to the leg base (3) and vice versa.

2. Container swap body or trailer according to claim 1,
**characterized in that**
- the operative connection is a coupling bar (13), which is connected with its one end region (13a), preferably articulated about a transverse axis (13a') to the extension direction (7'), to the free end region (4a) of the leg rod (4), in particular the foot plate (5),
- in the case of the presence of a working cylinder (14) as a leg rod (4), to which part of the working cylinder (14) representing the free end (4a) of the leg rod (4), i.e. cylinder (14a) or piston (14b), is connected,
- in particular the extension drive (7) comprises a working cylinder (14), in particular an electric cylinder, pneumatic cylinder or hydraulic cylinder.
(solution: toothing of coupling bar)

3. Container swap body or trailer according to claim 2,
**characterized in that**
- the coupling bar (13) is construed in its other end region (13b) as a gear rod (21) which extends in the extension direction (7') and
- a pinion (22) meshing therewith is arranged concentrically to the horizontal pivot axis (6) and is non-rotatably connected to the leg base (3).

4. Container swap body or trailer according to one of the claims 2 or 3,
**characterized in that**
the coupling bar is a guide bar,
the guide bar (13) is
- either non-rotatably connected to the free end portion (4a) of the leg rod (4)
- or hinged to this end region (4a) and the gear rod (21) is guided by means of a guide (22) in extension direction (7') on the leg rod (4).
(Solution Guide pin eccentric to pivot point on base 3)

5. Container swap body or trailer according to one of the claims 2 to 4,
**characterized in that**
- the coupling bar (13) is hinged to the leg base (3) in its other end region (13b) at a distance from the pivot axis (6),
- in particular, the distance is dimensioned in such a way that the change in length of the leg rod (4) between the maximum and minimum length causes the leg rod (4) to pivot by 90° relative to the leg base (3).
(Solution guide pin in groove)

6. Container swap body or trailer according to one of the claims 2 to 5,
**characterized in that**
- the coupling bar (13) has a guide pin (8) in its other end region (13b),
- a guide groove (9) is formed in the leg base (3) in which the guide pin (8) is guided, which extends at least partially in an arc (9a) around the horizontal pivot axis (6),
- from the horizontal pivot axis (6) to the centre line of the guide groove (9), the horizontal distance (H) measured in the horizontal plane (10, 11) is greater than the vertical distance (V) measured in the vertical direction (12) or the vertical distance (V) measured up to the highest point of the guide groove (9),
- the arc (9a) of the guide groove (9) is formed on that side of the horizontal pivot axis (6) to which the leg rod (4) is to be pivoted up from the vertical position.

7. Container swap body or trailer according to claim 6,
**characterized in that**
- the arc (9a) extends over 90°.
and/or
- the arc (9a) is a circular arc.

8. Container swap body or trailer according to one of the claims 6 or 7,
**characterized in that**
- the upper end of the arc (9a) is followed by a straight, in particular horizontal, extension (9b) of the guide groove (9),
and/or
- the lower end of the arc (9a) is followed by an upright straight, in particular vertical, extension (9c) of the guide groove (9).

9. Container swap body or trailer according to one of the claims 6 to 8,
**characterized in that**
- the guide pin (8) is formed at one end region (13a) of a guide bar (13) which is connected in the other end region (13b) either to the free end of the leg rod (4), in particular the foot plate (5), or in the case of the presence of a working cylinder (14) to the part of the working cylinder (14) having the free end of the leg rod (4), i.e. cylinder (14a) or piston (14b).
and / or
- in the case of a cargo bicycle (100), both support legs (2) can be pivoted out horizontally.

10. Container swap body or trailer according to one of the preceding claims,
**characterized in that**
for an electric extension drive (7)
- the support leg (2) comprises an electric battery (17) and
- current-generating solar cells (18) are in particular arranged at the container swap body (1) or trailer (1'), in particular on the upper side (1b) thereof.
(pivoted out around upright axis)

11. Container swap body or trailer according to one of the preceding claims,
**characterized in that**
- the leg base (3) is attached to the container swap body (1) or trailer (1') or to a usually plate-shaped pivot base (23) firmly connected to it, so as to be pivotable about an upright axis (16), in particular a vertical axis (16), and
- in particular the upright axis (16) is arranged at a distance from the pivot axis (6).

12. Container swap body or trailer according to claim 11,
**characterized in that**
- the upright axis (16), viewed in plan view, is arranged within the base area (1") of the container swap body (1) or trailer (1') and
- when pivoted out horizontally, the leg base (3) can be positioned at least partially outside the container swap body (1), in particular in the transverse direction (10) outside or in the direction of travel (10) outside.
(Automatic pivoting around upright axis)

13. Container swap body or trailer according to one of the preceding claims,
**characterized in that**
- between the leg rod (4) and the pivot base (23) or the trailer (1') or the container swap body (1) there is such a, preferably mechanical, operative connection which, when the leg rod (4) is retracted or extended, pivots the leg base (3) in or out relative to the pivot base (23),
- whereby the operative connection in particular includes
- a toothed circle segment (24) which is arranged on the leg rod (4) in a rotationally fixed and concentric manner around the horizontal pivot axis (6),
- a toothed channel arc (25) which is arranged concentrically around the upright axis (16) in the pivot base (23) so that
- the teeth of the toothed circle segment (24) can engage and mesh with the teeth arranged at a flange of the toothed channel arc (25).

14. Container swap body or trailer according to claim 13,
**characterized in that**
- the toothed channel arc (25) is an arc-shaped opening in the plate-shaped pivot base (23)
and/or
- the teeth of the toothed circle segment (24) extend through an opening (26) of the leg base (3), in particular of the horizontal limb (3a) of the leg base (3).

15. **Cargo bike** (100) with
- a loading platform (102b1) with a swap container (1) located on it
- wheels, in particular rear wheels (117), for supporting the loading platform (102b1),
- wherein the container swap body (1) has support legs (2) which are adjustable between a deactivated and an activated position supporting relative to the ground,
**characterized in that**
- the container swap body (1) is construed according to one of the preceding claims.

16. Cargo bike (100) according to claim 15,
wherein the wheels are arranged at a rocker arm (116),
**characterized in that**
the extension elements are arranged between the loading platform (102b1) on the one hand and either the rocker arm (116) or the wheels on the other.

## Revendications

1. Conteneur interchangeable (1) ou remorque (1') pour une bicyclette de transport (100), avec des jambes de support (2) pivotants et extensibles, dans lequel
- vu en plan, au moins deux jambes de support (2) sont disposées dans les zones extérieures dans la zone inférieure dans le cas d'une remorque (1') et au moins trois, de préférence quatre, dans le cas d'un conteneur interchangeable (1),
- chaque jambe de support (2) comprend
- une base de jambe (3) fixé au conteneur interchangeable (1) ou à la remorque (1'),
- un support de jambe (4) s'étendant en s'éloignant de la base de jambe (3) et
- à l'extrémité libre (4a) du support de jambe (4), une surface d'appui (5a), en particulier une plaque de pied (5),
- le support de jambe (4) peut pivoter par rapport à la base de jambe (3) autour d'un axe de pivotement (6) s'étendant horizontalement,
- la longueur (L) de la jambe de support (2) de l'axe de pivotement (6) à la surface d'appui (5a) dans une direction d'extension (7') peut être modifiée au moyen d'un entraînement d'extension (7), en particulier le support de jambe (4) peut être étendu dans sa direction d'extension principale (4'),
**caractérisé en ce que**
la zone d'extrémité libre (4a) du support de jambe (4) est couplée à la base de jambe par une liaison fonctionnelle telle que, lorsque la longueur (L) du support de jambe (4) est réduite, le support de jambe (4) pivote automatiquement vers le haut autour de l'axe de pivotement horizontal (6) par rapport à la base de jambe et inversement.

2. Conteneur interchangeable ou remorque selon la revendication 1,
**caractérisé en ce que**
- la liaison de coopération est un support d'accouplement (13), qui est relié par une de ses zones d'extrémité (13a), de préférence articulée autour d'un axe transversal (13a') à la direction d'extension (7'), à la zone d'extrémité libre (4a) du support de jambe (4), en particulier de la plaque de pied (5),
- en cas de présence d'un cylindre de travail (14) en tant que support de jambe (4), auquel est reliée la partie du cylindre de travail (14) représentant la zone d'extrémité libre (4a) du support de jambe (4), c'est-à-dire le cylindre (14a) ou le piston (14b),
- en particulier, l'entraînement d'extension (7) comprend un cylindre de travail (14), notamment un cylindre électrique, un cylindre pneumatique ou un cylindre hydraulique.
(Solution denture support d'accouplement)

3. Conteneur interchangeable ou remorque selon la revendication 2,
**caractérisé en ce que**
- le support d'accouplement (13) est conçue dans son autre zone d'extrémité (13b) comme une crémaillère (21) qui s'étend dans la direction d'extension (7') et
- un pignon (22) engrenant avec celui-ci est disposé concentriquement à l'axe de pivotement horizontal (6) et est relié de manière non rotative à la base de jambe (3).

4. Conteneur interchangeable ou remorque selon une des revendications 2 ou 3,
**caractérisé en ce que** le support d'accouplement est un support de guidage, le support de guidage (13)
- est relié de manière non rotative à la partie d'extrémité libre (4a) du support de jambe (4)
- ou est relié de manière articulée à cette zone d'extrémité (4a) et la crémaillère (21) est guidée au moyen d'un guidage (22) dans le joint d'extension (7') du support de jambe (4).
(Solution goupille de guidage excentré au point de pivot sur la base 3)

5. Conteneur interchangeable ou remorque selon une des revendications 2 à 4,
**caractérisé en ce que**
- le support d'accouplement (13) est articulé à la base de jambe (3) dans son autre zone d'extrémité (13b) à une distance de l'axe de pivotement (6),
- en particulier, la distance est dimensionnée de telle manière que la modification de la longueur du support de jambe (4) entre la longueur maximale et la longueur minimale entraîne un pivotement de 90° du support de jambe (4) par rapport à la base de jambe (3).
(Solution goupille de guidage dans rainure)

6. Conteneur interchangeable ou remorque selon l'une des revendications 2 à 5,
**caractérisé en ce que**
- le support d'accouplement (13) comprend une goupille de guidage (8) dans son autre zone d'extrémité (13b),
- une rainure de guidage (9) est formée dans la base de jambe (3) dans laquelle est guidée la goupille de guidage (8), qui s'étend au moins partiellement en arc (9a) autour de l'axe de pivotement horizontal (6),
de l'axe de pivotement horizontal (6) à l'axe central de la rainure de guidage (9), la distance horizontale (H) mesurée dans l'horizontale (10, 11) est supérieure à la distance verticale (V) mesurée dans la verticale (12) ou à la distance verticale (V) mesurée jusqu'au point le plus haut de la rainure de guidage (9),
- l'arc (9a) de la rainure de guidage (9) est formé du côté de l'axe de pivotement horizontal (6) sur lequel le support de jambe (4) doit être pivoté vers le haut à partir de la position verticale.

7. Conteneur interchangeable ou remorque selon la revendication 6,
**caractérisé en ce que**
- l'arc (9a) s'étend sur 90°.
et/ou
- l'arc (9a) est un arc de cercle.

8. Conteneur interchangeable ou remorque selon l'une des revendications 6 ou 7,
**caractérisé en ce que**
- l'extrémité supérieure de l'arc (9a) est suivie d'une extension droite, notamment d'une extension horizontale (9b) de la rainure de guidage (9),
et/ou
- l'extrémité inférieure de l'arc (9a) est suivie d'une droite verticale, notamment d'une extension verticale (9c) de la rainure de guidage (9).

9. Conteneur interchangeable ou remorque selon l'une des revendications 6 à 8,
**caractérisé en ce que**
la goupille de guidage (8) est formée dans une zone d'extrémité (13a) d'un support de guidage (13) qui est reliée dans l'autre zone d'extrémité (13b) soit à l'extrémité libre du support de jambe (4), en particulier à la plaque de pied (5), soit, en cas de présence d'un cylindre de travail (14), à la partie du cylindre de travail (14) présentant l'extrémité libre du support de jambe (4), c'est-à-dire le cylindre (14a) ou le piston (14b),
et / ou
- dans le cas d'un vélo cargo (100), les deux jambes de support (2) peuvent être pivotées horizontalement.

10. Conteneur interchangeable ou remorque selon l'une des revendications précédentes,
**caractérisé en ce que**
pour un entraînement électrique d'extension (7)
- la jambe de support (2) comprend une batterie électrique (17),
- des cellules solaires (18) générant du courant sont agencées notamment sur le conteneur interchangeable (1) ou la remorque (1'), en particulier sur sa face supérieure (1b).
(Pivotement autour d'un axe vertical)

11. Conteneur interchangeable ou remorque selon l'une des revendications précédentes,
**caractérisé en ce que**
- la base de jambe (3) est fixée au conteneur interchangeable (1) ou à la remorque (1') ou à une base de pivotement (23), généralement en forme de plaque, qui y est solidement reliée, de manière à pouvoir pivoter autour d'un axe droit (16), en particulier un axe vertical (16), et
- en particulier, l'axe vertical (16) est disposé à distance de l'axe de pivotement (6).

12. Conteneur interchangeable ou remorque selon la revendication 11,
**caractérisé en ce que**
- l'axe vertical (16), vu de dessus, est disposé dans la zone de base (1") du conteneur interchangeable (1) ou de la remorque (1') et
- lors du pivotement horizontal la base de jambe (3) peut être positionnée au moins partiellement à l'extérieur du conteneur interchangeable (1), en particulier à l'extérieur dans le sens transversal (10) ou à l'extérieur dans le sens de la marche (10).
(Pivotement automatique autour d'un axe vertical)

13. Conteneur interchangeable ou remorque selon l'une des revendications précédentes,
**caractérisé en ce que**
- entre le support de jambe (4) et la base de pivotement (23) ou la remorque (2) ou le conteneur interchangeable (1), il existe une liaison fonctionnelle, de préférence mécanique, qui, lorsque le support de jambe (4) est rentrée ou sortie, fait pivoter la base (3) vers l'intérieur ou vers l'extérieur par rapport à la base de pivotement (23),
- comprend notamment le composé actif
- un segment de cercle denté (24) qui est disposé sur le support de jambe (4) de manière fixe en rotation et concentrique autour de l'axe de pivotement horizontal (6),
- un arc de canal denté (25) est disposé concentriquement autour de l'axe vertical (16) dans la base de pivotement (23) de sorte que
- les dents du segment de cercle denté (24) peuvent s'engager et s'engrener avec les dents du segment de cercle denté (24) sur un flanc de l'arc du canal de dents (25).

14. Conteneur interchangeable ou remorque selon la revendication 13,
**caractérisé en ce que**
- l'arc du canal denté (25) est une ouverture en forme d'arc dans la base de pivotement en forme de plaque (23)
et/ou
- les dents du segment de cercle denté (24) s'étendent à travers une ouverture (26) de la base de jambe (3), en particulier de la branche horizontale (3a) de la base de jambe (3).

15. Vélo cargo (100) avec
- une plate-forme de chargement (102b1) sur laquelle se trouve un conteneur interchangeable (1)
- des roues, en particulier des roues arrière (117), pour supporter la plate-forme de chargement (102b1),
- dans lequel le conteneur interchangeable (1) comprend des jambes de support (2) qui sont réglables entre une position désactivée et une position activée dans laquelle il est soutenu par rapport au sol
**caractérisé en ce que**
- le conteneur interchangeable (1) est adapté en fonction de l'une des revendications précédentes.

16. Vélo cargo (100) selon la revendication 15,
Dans lequel les roues sont disposées sur un bras oscillant (116),
**caractérisé en ce que**
les éléments d'extension sont disposés entre la plate-forme de chargement (102b1) d'une part et le bras oscillant (116) ou les roues d'autre part.
